# EUROPEAN PATENT SPECIFICATION

(11) **EP 2 987 269 B1**
(45) Date of publication and mention of the grant of the patent: **11.07.2018**
(21) Application number: 14785219.8
(22) Date of filing: 10.02.2014
(51) Int. Cl.: H04L 12/12, H04L 12/28, G06F 9/06, G06F 9/00

(54) **METHOD AND SYSTEM FOR CONTROLLING EXTERNAL DEVICE**
VERFAHREN UND SYSTEM ZUR STEUERUNG EINER EXTERNEN VORRICHTUNG
PROCÉDÉ ET SYSTÈME POUR COMMANDER UN DISPOSITIF EXTERNE

(30) Priority: 15.04.2013 KR 20130041262
(43) Date of publication of application: 24.02.2016
(73) Proprietor: Samsung Electronics Co., Ltd., Suwon-si, Gyeonggi-do 443-742 (KR)
(72) Inventor: LIM, Hun, Yongin-si Gyeonggi-do 448-160 (KR); LEE, Sang-ho, Seongnam-si Gyeonggi-do 463-722 (KR)
(74) Representative: HGF Limited
(86) International application number: PCT/KR2014/001087
(87) International publication number: WO 2014/171620

(56) References cited:
- EP-A1- 1 145 244
- EP-B1- 1 145 244
- US-A1- 2011 055 716
- US-A1- 2011 162 013
- US-A1- 2012 200 400
- US-B1- 7 577 910
- US-B1- 7 577 910

## Description

### Technical Field

The present disclosure relates to a method and system for controlling an external device by using a device.

### Background Art

With the development of communication technology, devices have become smart and ubiquitous, and external devices used with these devices have increased in terms of diversity. Thus, devices are capable of executing applications related to a diverse number of external devices in order to control the external devices.

The above information is presented as background information only to assist with an understanding of the present disclosure. No determination has been made, and no assertion is made, as to whether any of the above might be applicable as prior art with regard to the present disclosure.

### Disclosure of Invention

### Technical Problem

However, when an unspecified device controls an external device, an unexpected problem will occur. For example, when a home device is controlled by using a device of a person who is not a family member, it may lead to a malfunction of the home device or information stored in the home device may be leaked. Thus, there is a need for an environment where an unspecified device may be prevented from controlling an external device and a device for controlling the external device may be adaptively selected according to environmental circumstances.

The document US 7 577 910, 18^{th} August 2009 (2009-08-18), discloses a method for controlling at least one first device having a limited user-interface by using at least one second device, wherein the first and second devices communicate via a wireless communication channel and support a common communications protocol

According there is a need for a method and a system for controlling an external device by authorizing a specified device to temporarily control the external device.

### Solution to Problem

Aspects of the present disclosure are to address at least the above-mentioned problems and/or disadvantages and to provide at least the advantages described below. Accordingly, an aspect of the present disclosure is to provide a method and a system for controlling an external device by authorizing a specified device to temporarily control the external device, and a non-transitory computer readable medium storing the same.

Another aspect of the present disclosure is to provide a method and a system for controlling an external device by authorizing a remote device to temporarily control the external device, and a non-transitory computer readable medium storing the same.

Another aspect of the present disclosure is to provide a method and a system for controlling an external device of a device by authorizing a counterpart device of the device to temporarily control the external device when interaction services are performed between devices, and a non-transitory computer readable medium storing the same.

Additional aspects will be set forth in part in the description which follows and, in part, will be apparent from the description, or may be learned by practice of the presented various embodiments.

### Advantageous Effects of Invention

According to the above embodiments, it is possible to prevent controlling of an external device by an unspecified device.

### Brief Description of Drawings

The above and other aspects, features, and advantages of certain embodiments of the present disclosure will be more apparent from the following description taken in conjunction with the accompanying drawings, in which:
FIG. 1 is a block diagram of an external device control system, according to an embodiment of the present disclosure;
FIG. 2 illustrates a table defining control User Interface (UI) information provided according to control authorization levels assigned to external devices according to an embodiment of the present disclosure;
FIG. 3 illustrates a table defining control authorization levels assigned to external devices based on user information according to an embodiment of the present disclosure;
FIGS. 4, 5, 6, and 7 are flowcharts of a process of opening a communication session between a first device and external devices according to various embodiments of the present disclosure;
FIG. 8 is a flowchart of an external device control method according to an embodiment of the present disclosure;
FIG. 9 illustrates screens displayed on a second device when a video call service is performed according to an embodiment of the present disclosure;
FIG. 10 illustrates screens displayed on a second device when a video call service is performed according to another embodiment of the present disclosure;
FIG. 11 is a flowchart of an external device control method according to another embodiment of the present disclosure;
FIG. 12 is a flowchart of an external device control method according to another embodiment of the present disclosure;
FIG. 13 is a flowchart of an external device control method according to another embodiment of the present disclosure;
FIG. 14 is a flowchart of an external device control method according to another embodiment of the present disclosure;
FIG. 15 is a flowchart of an external device control method according to another embodiment of the present disclosure;
FIG. 16 is a flowchart of an external device control method according to another embodiment of the present disclosure;
FIG. 17 is a flowchart of an external device control method according to another embodiment of the present disclosure;
FIG. 18 illustrates screens displayed on a first device when an external device is controlled based on the flowchart of FIG. 17 according to an embodiment of the present disclosure;
FIG. 19 is a flowchart of an external device control method according to another embodiment of the present disclosure;
FIG. 20 is a flowchart of an external device control method according to another embodiment of the present disclosure;
FIG. 21 illustrates screens displayed on a second device when temporary control authorization is requested due to the occurrence of an emergency situation according to an embodiment of the present disclosure;
FIG. 22 is a flowchart of an external device control method according to another embodiment of the present disclosure;
FIG. 23 illustrates screens displayed on a second device when the external device control method of FIG. 22 is performed according to an embodiment of the present disclosure;
FIG. 24 is a flowchart of an external device control method according to another embodiment of the present disclosure;
FIG. 25 illustrates screens displayed on a second device based on the flowchart of FIG. 24 according to an embodiment of the present disclosure;
FIG. 26 is a block diagram of a first device of FIG. 1 according to an embodiment of the present disclosure;
FIG. 27 illustrates an example of programs and/or command sets that are stored in a storage unit of FIG. 26 according to an embodiment of the present disclosure;
FIG. 28 is a block diagram of first through nth external devices of FIG. 1 according to an embodiment of the present disclosure; and
FIGS. 29, 30, 31, 32, and 33 illustrate examples implemented according to various embodiments of the present disclosure.

Throughout the drawings, it should be noted that like reference numbers are used to depict the same or similar elements, features, and structures.

### Best Mode for Carrying out the Invention

In accordance with an aspect of the present disclosure, an external device control method is provided. The external device control method includes transmitting information regarding at least one external device to a second device while an interactive service is executed between a first device and the second device, receiving information regarding a selected external device based on the information regarding the at least one external device from the second device, and transmitting control User Interface (UI) information regarding the selected external device to the second device based on the information regarding the selected external device.

In accordance with another aspect of the present disclosure, a device for controlling an external device is provided. The device includes a storage unit configured to store information regarding at least one external device and at least one program, a communication unit configured to communicate with the at least one external device and another device, a touch screen configured to receive user input information and output information according to executing the at least one program, and a processor configured to provide touch screen based UI information and authorize the other device to temporarily control the at least one external device by executing the at least one program, wherein the at least one program comprises commands that upon execution transmit information regarding the at least one external device to the other device while an interactive service is executed between the device and the other device through the communication unit, receive information regarding a selected external device based on the information regarding the at least one external device from the other device through the communication unit, and transmit control UI information regarding the selected external device to the other device through the communication unit based on the information regarding the selected external device

In accordance with another aspect of the present disclosure, a non-transitory computer readable recording medium storing one or more programs comprising commands when executed by a processor perform an external device control method is provided. The external device control method includes transmitting information regarding at least one external device to a second device while an interactive service is executed between a first device and the second device, receiving information regarding a selected external device based on the information regarding the at least one external device from the second device, and transmitting control UI information regarding the selected external device to the second device based on the information regarding the selected external device.

In accordance with another aspect of the present disclosure, an external device control method is provided. The external device control method includes receiving and displaying information regarding at least one external device from a first device while an interactive service is executed between the first device and a second device, transmitting information regarding a selected external device based on the displayed information regarding the at least one external device to the first device, receiving and displaying control UI information regarding the selected external device based on the information regarding the selected external device from the first device, and transmitting a control command based on the displayed control UI information to the selected external device.

In accordance with another aspect of the present disclosure, a device for controlling an external device is provided. The device includes a storage unit configured to store at least one program, a touch screen configured to receive user input information and display information by executing the at least one program, a communication unit configured to communicate with another device and at least one external device of which control is authorized to the other device, and a processor configured to provide a touch screen based UI and that is authorized to temporarily control the at least other device by executing the at least one program, wherein the at least one program comprises commands that upon execution receive and display information regarding the at least one external device from the other device while an interactive service is executed between the device and the other device, transmitting information regarding a selected external device based on the displayed information regarding the at least one external device to the other device, receive and display control UI information regarding the selected external device based on the information regarding the selected external device from the other device, and transmit a control command based on the displayed control UI information to the selected external device.

In accordance with another aspect of the present disclosure, a non-transitory computer readable recording medium storing one or more programs comprising commands when executed by a processor perform an external device control method is provided. The external device control method includes receiving and displaying information regarding at least one external device from a first device while an interactive service is executed between the first device and a second device, transmitting information regarding a selected external device based on the displayed information regarding the at least one external device to the first device, receiving and displaying control UI information regarding the selected external device based on the information regarding the selected external device from the first device, and transmitting a control command based on the displayed control UI information to the selected external device.

Other aspects, advantages, and salient features of the disclosure will become apparent to those skilled in the art from the following detailed description, which, taken in conjunction with the annexed drawings, discloses various embodiments of the present disclosure.

### Mode for the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the specification, a situation is based on a specified condition. That is, the situation may include, for example, a situation in which a service such as an interactive service between devices is performed, an emergency situation in which a fire, a burglary, a medical emergency, or an earthquake takes place, a situation in which a device enters a specified domain, and the like, but is not limited thereto. Thus, the specified condition may include, for example, a condition for providing an interactive service between devices, a condition determined as the emergency situation, a condition for determining that the device enters the specified domain, and the like, but is not limited thereto.

Throughout the specification, a device may control an external device while the device may execute an application related to an external device. Throughout the specification, an external device is configured as hardware and software that may operate with the application, which is executed by the device, related to the external device. Thus, the device may be a host device, and the external device may be an accessory of the device.

However, according to various embodiments, the device may not execute the application related to the external device and may control the external device by using another device that executes the application related to the external device. In this case, the application relating to the external device may not be installed in the device or although the application related to the external device is installed in the device, the application installed in the device may not be executed.

Throughout the specification, an application refers to a computer program devised to perform specified operations based on a connection between a device and an external device or between devices.

The application based on the connection between the device and the external device may include, for example, a game application, an instrument playing application, a moving image reproduction application, a map application, a broadcasting application, an exercise support application, a medical application, a payment application, a transportation mode (for example, a car, a bus, an airplane, or a ship, etc.) automatic navigation application, a peripheral device control application (for example, a control application for home device, such as a smart TV, an air conditioner, a robot cleaner, an air cleaner, a printer, etc.), and the like, but is not limited thereto.

The application based on the connection between the devices may include, for example, an application based on an interactive service between the devices, but is not limited thereto. The interactive service may include, for example, a real-time two-way communication service such as a video call service, a voice call service, a chatting service, and the like, but is not limited thereto.

The application based on the interactive service between the devices may include the application based on the connection between the device and the external device. For example, when the external device is a smart TV, the devices are smart phones, and the interactive service between the devices is a video call service, an application providing the video call service may include an application related to the smart TV (or an application for controlling an operation of the smart TV).

When the application related to the video call service including the application relating to the smart TV as described above is executed, the device may control the smart TV while the device may perform the video call service. The application related to the smart TV included in the application providing the video call service may be referred to as a smart TV control function or a sub application of the application providing the video call service, but is not limited thereto.

The interactive service between the devices may include a function of calling the application based on the connection between the device and the external device. For example, the interactive service between the devices may perform multitasking capable of controlling the external device by calling the application related to the external device (for example, the application related to the smart TV) while the interactive service between the devices may perform the video call service between the devices as described above.

Throughout the specification, input information is input information of a user and is touch based input information. The touch based input information may include a user request, a user selection (for example, a selection of identification information (for example, a name of an external device including an air conditioner, a smart TV, etc.) of a displayed external device), or a user command (for example, a control command related to the external device based on control user interface (UI) information of the external device), but is not limited thereto.

The touch based input information may depend on a user gesture. A touch based user gesture may include, for example, a tap (or a touch), a long tap (or a long touch), a touch and hold, a touch and drag, a double tap, dragging, panning, a flick, a drag and drop, a sweep, and the like, but is not limited thereto.

The input information is not limited to the touch based user gesture. For example, the input information may be motion based input information or vision based input information. The motion based input information may be based on user gesture according to a device motion (for example, a device shaking, a device tapping, etc.). The vision based input information may be based on a user gesture recognized by analyzing an input image captured by a camera without contacting the device.

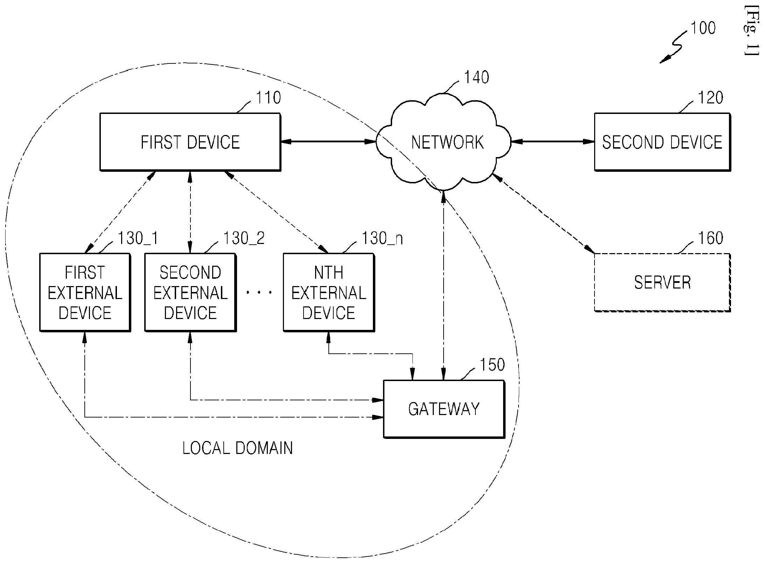

FIG. 1 is a block diagram of an external device control system 100 according to an embodiment of the present disclosure.

Referring to FIG. 1, the external device control system 100 includes a first device 110, a second device 120, first through nth external devices 130_1∼130_n, a network 140, a gateway 150, and a server 160, but is not limited thereto.

That is, the external device control system 100 may not include the gateway 150 and the server 160. The external device control system 100 may include a plurality of devices such as the second device 120. The first device 110 is authorized to control the first through nth external devices 130_1∼130_n. The second device 120 may be authorized to temporarily control the first through nth external devices 130_1∼130_n. Thus, due to the external device control system 100 including the plurality of devices such as the second device 120, the plurality of devices may be authorized to temporarily control the first through nth external devices 130_1∼130_n.

The external device control system 100 may include at least one external device such as the first through nth external devices 130_1∼130_n within a home network based on a second device 120 or a local domain based on the second device 120. The second device 120 may be authorized to control the at least one external device within the home network or the local domain. In this case, the first device 110 may be authorized to temporarily control the at least one external device within the home network or the local domain.

The first device 110, the first through nth external devices 130_1∼130_n, and the gateway 150 may be referred to as being in a physical local domain. The physical local domain may be, for example, a physical region based on a place that may be identified by a name such as home, an office, a restaurant, a parking lot, etc., but is not limited thereto. In this case, the first device 110 may be a host device.

The first through nth external devices 130_1∼130_n may be local devices or accessories of the first device 110. The gateway 150 may be a home gateway or a home server. The gateway 150 may include a relay function such as an access point. The gateway 150 may be authorized to control the first through nth external devices 130_1∼130_n that are included in a local domain or the first through nth external devices 130_1∼130_n and the first device 110.

The local domain including the first device 110, the first through nth external devices 130_1∼130_n, and the gateway 150 may be a logical region based on an IP sub network.

The first device 110 may include, for example, at least one of a smart phone, a smart TV, a Personal Computer (PC), a desktop PC, a notebook, a smart board, a tablet PC, a phablet, a navigation device, a mobile device, a handheld device or a handheld PC, a media player, an e-book terminal, a Personal Digital Assistant (PDA), a digital camera having a function of inputting a touch based user gesture, and a digital Consumer Electronics (CE) device (for example, an image display or a device having a function of inputting the touch based user gesture), but is not limited thereto.

The first device 110 is authorized to control the first through nth external devices 130_1∼130_n. Applications related to the first through nth external devices 130_1∼130_n may be installed in the first device 110. When an application related to at least one of the first through nth external devices 130_1∼130_n is not installed in the first device 110, the first device 110 may download and install the application related to the at least one external device from the server 160.

The applications related to the first through nth external devices 130_1∼130_n that are installed in the first device 110 relate to the first through nth external devices 130_1∼130_n, respectively. For example, when the first external device 130_1 is a smart TV, the second external device 130_2 is a robot cleaner, and the nth external device 130_n is an air conditioner, a smart TV application, a robot cleaner application, and an air conditioner application may be installed in the first device 110.

However, an integrated application related to the first through nth external devices 130_1∼130_n may be installed in the first device 110. The integrated application is an application configured by integrating applications capable of controlling functions of the first through nth external devices 130_1∼130_n into one application. For example, when the first external device 130_1 is the smart TV, the second external device 130_2 is the robot cleaner, and the nth external device 130_n is the air conditioner, the integrated application may include all of a smart TV function, a robot cleaner function, and an air conditioner function. The functions of the first through nth external devices 130_1∼130_n may be functions of controlling the first through nth external devices 130_1∼130_n. The integrated application may have a function capable of adding a function of a new external device. For example, when the air conditioner is added to the local domain, the integrated application may have a function capable of adding information regarding the air conditioner application.

The integrated application may be configured to respectively call the applications related to the first through nth external devices 130_1∼130_n according to circumstances. For example, the integrated application may be configured to respectively call the smart TV application and the robot cleaner application according to necessity. In this case, the smart TV application and the robot cleaner application may be external applications of the integrated application.

When the integrated application is installed in the first device 110, the first device 110 may execute the integrated application to respectively control the functions of the first through nth external devices 130_1∼130_n. That is, when the integrated application is executed by using the first device 110, information regarding the first through nth external devices 130_1∼130_n is displayed on the first device 110. The information regarding the first through nth external devices 130_1∼130_n may include identification information of the first through nth external devices 130_1∼130_n. The identification information may include, for example, names of the first through nth external devices 130_1∼130_n. The information regarding the first through nth external devices 130_1∼130_n that is displayed on the first device 110 may be list based information or augmented reality based information.

When one external device is selected based on the information regarding the first through nth external devices 130_1∼130_n that is displayed on the first device 110, the first device 110 displays control UI information used to control a function of the selected external device. A user may control a desired function based on the control UI information that is displayed on the first device 110.

When the applications related to the first through nth external devices 130_1∼130_n are installed in the first device 110, the first device 110 may be configured to display a list of the first through nth external devices 130_1∼130_n that may be controlled by using an external device control widget and to select and control a desired external device based on the displayed list of the first through nth external devices 130_1∼130_n.

An application for executing an interactive service between the first device 110 and the second device 120 may include a function related to the integrated application. For example, when the interactive service is the video call service, a video call service application may include the function related to the integrated application. In this case, when the interactive service between the first device 110 and the second device 120 is performed, the first device 110 does not execute the applications related to the first through nth external devices 130_1∼130_n but may transmit the information regarding the first through nth external devices 130_1∼130_n and the control UI information to the second device 120 according to an external device control request of a user of the first device 110. Accordingly, the second device 120 may remotely control the first through nth external devices 130_1∼130_n.

The application for executing the interactive service such as the video call service may not include the function related to the integrated application. In this case, the first device 110 may execute an application related to at least one of the first through nth external devices 130_1∼130_n that is independent from the application for executing the video call service to transmit the control UI information to the second device 120. In this regard, the application related to at least one of the first through nth external devices 130_1∼130_n may be called by the application for executing the video call service.

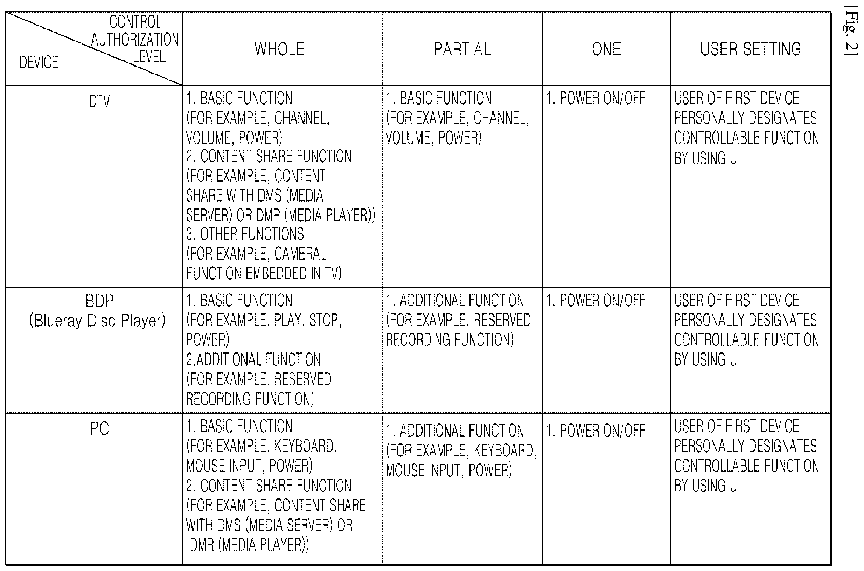

The control UI information may include information based on a table shown in FIG. 2. FIG. 2 illustrates a table defining control UI information provided according to control authorization levels with respect to the first through nth external devices 130_1∼130_n according to an embodiment of the present disclosure.

Referring to FIG. 2, examples of the first through nth external devices 130_1∼130_n include a digital TV (DTV), a Blue-ray Disc Player (BDP), and a PC instantiated as rows in the table of FIG. 2. The control authorization levels with respect to the first through nth external devices 130_1∼130_n include whole, partial, one, and user setting items instantiated as columns in the table of FIG. 2. The first through nth external devices 130_1∼130_n and the control authorization levels about the first through nth external devices 130_1∼130_n are not limited to those illustrated in FIG. 2.

For example, the partial item of FIG. 2 may be set as a plurality of partial items. That is, the partial item of FIG. 2 may be set as a partial item 1, a partial item 2, and a partial item 3. Functions included in the partial item 1, the partial item 2, and the partial item 3 may be differently set or may be set to gradually increase or gradually decrease.

For example, a TV basic function (for example, a channel control function, a volume control function, and a power control function) is set as the partial item of the DTV. However, when the partial item of the DTV is set as the partial items 1, 2, and 3, the TV basic function may be set as the item 1, a content share function may be set as the partial item 2, and another function may be set as the partial item 3. Alternatively, the TV basic function and the content share function may be set as the partial item 1, the TV basic function and another function may be set as the partial item 2, and the content share function and another function may be set as the partial item 3. Alternatively, the TV basic function and the content share function may be set as the partial item 1, and the TV basic function may be set as the partial item 2. However, setting of functions of the first through nth external devices 130_1∼130_n as the above-described partial item is not limited to those described above.

Control UI information regarding the first through nth external devices 130_1∼130_n may be configured as hierarchically defined control function items as illustrated in FIG. 2. That is, referring to FIG. 2, the basic function, the content share function, and another function of the DTV are set as the same layers. The channel control function, the volume control function, and the power control function are set as subordinate layers of the basic function. A function of sharing content between a Digital Media Server (DMS) and the DTV and a function of sharing content between a Digital Media Renderer (DMR) and the DTV are set as subordinate layers of the content share function. A camera function is set as a subordinate layer of another function. However, a hierarchical structure of the control UI information is not limited thereto.

When a control authorization level of the first device 110 with respect to the first through nth external devices 130_1∼130_n is whole, and the first through nth external devices 130_1∼130_n are the DTV, the BDP, and the PC that are included in the table of FIG. 2, the control UI information may include whole function information included in DTV, BDP, and PC items of FIG. 2.

When the control authorization level of the first device 110 with respect to the first through nth external devices 130_1∼130_n is partial, and the first through nth external devices 130_1∼130_n are the DTV, the BDP, and the PC that are included in the table of FIG. 2, the control UI information may include partial function information included in the DTV, BDP, and PC items of FIG. 2.

When the control authorization level of the first device 110 with respect to the first through nth external devices 130_1∼130_n is one, and the first through nth external devices 130_1∼130_n are the DTV, the BDP, and the PC that are included in the table of FIG. 2, the control UI information may include one piece of function information (for example, power on/off control function information) included in the DTV, BDP, and PC items of FIG. 2.

The control UI information may be differently provided according to the control authorization level of the first device 110 with respect to the first through nth external devices 130_1∼130_n. Thus, when the second device 120 is authorized to temporarily control the first through nth external devices 130_1∼130_n, a temporary control authorization range may be limited to a control authorization range of the first device 110 with respect to the first through nth external devices 130_1∼130_n. For example, when the control authorization level of the first device 110 with respect to the first through nth external devices 130_1∼130_n is the item "partial" defined in FIG. 2, a control authorization level of the second device 120 with respect to the first through nth external devices 130_1∼130_n may not be the item "whole".

For convenience of description, a case where the control authorization level of the first device 110 with respect to the first through nth external devices 130_1∼130_n is the item "whole" in various embodiments will be described below.

In regard to the user setting item of FIG. 2, a user of the first device 110 manually selects and transmits the control UI information to the second device 120.

The control authorization level of the first device 110 with respect to the first through nth external devices 130_1∼130_n may be determined based on user information of the first device 110. Thus, when the user information of the first device 110 include information indicating a user 1 (for example, a father) and a user 2 (for example, a son), a control authorization level of the first device 110 with respect to the first through nth external devices 130_1∼130_n based on the user 1 may be different from a control authorization level of the first device 110 with respect to the first through nth external devices 130_1∼130_n based on the user 2. Differentiating the control authorization level of the first device 110 with respect to the first through nth external devices 130_1∼130_n according to a user may mean differentiating a control range of the first device 110 with respect to the first through nth external devices 130_1∼130_n according to the user.

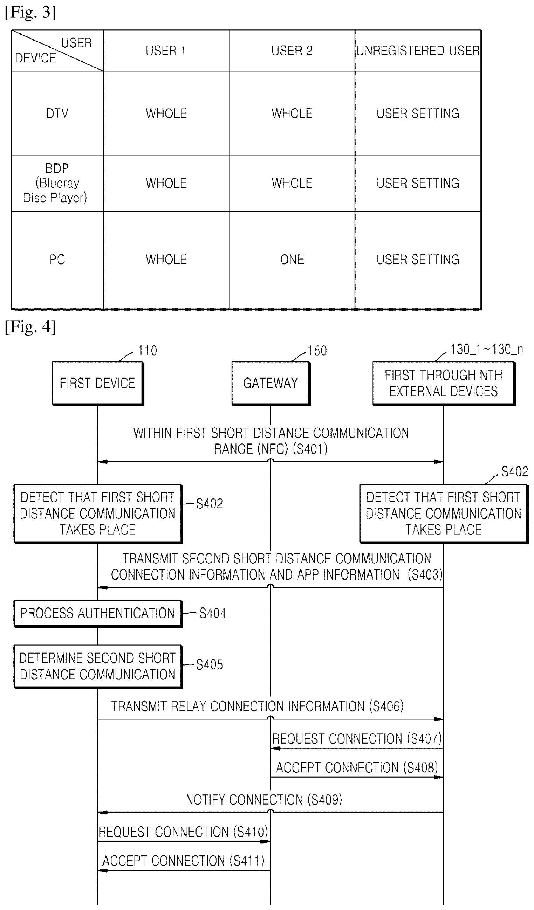

FIG. 3 illustrates a table defining control authorization levels about the first through nth external devices 130_1∼130_n based on user information of the first device 110 according to an embodiment of the present disclosure.

Referring to FIG. 3, when a user of the first device 110 is a user 1, a control authorization level of the first device 110 with respect to the first through nth external devices 130_1∼130_ n is assigned to authority capable of controlling whole functions of the first through nth external devices 130_1∼130_n. When the user of the first device 110 is a user 2, the control authorization level of the first device 110 is assigned to authority capable of controlling a whole function of a DTV, a partial function of a BDP, and one function of a PC among the first through nth external devices 130_1∼130_n. When the user of the first device 110 is an unregistered user, the control authorization level of the first device 110 may be determined by using another device that is authorized to control each of the first through nth external devices 130_1∼130_n. In this case, the control authorization level of the first device 110 may be different from a temporary control authorization level provided to the second device 120.

The control authorization level and user control interface information regarding each of the first through nth external devices 130_1∼130_n, which may be provided according to the control authorization level, may apply to the temporary control authorization level of the second device 120. That is, the temporary control authorization level of the second device 120 is determined based on the user information of the first device 110, and the user control interface information regarding the first through nth external devices 130_1∼130_n is determined according to the determined temporary control authorization level. The user control interface information regarding the first through nth external devices 130_1∼130_n that is determined according to the temporary control authorization level may be referred to as a control UI information range of the first through nth external devices 130_1∼130_n.

The control UI information provided to the second device 120 includes information regarding the first through nth external devices 130_1∼130_n and controllable function information of the first through nth external devices 130_1∼130_n defined in the table of FIG. 2 but is not limited thereto. The information regarding the first through nth external devices 130_1∼130_n may include list based information or augmented reality based information.

When the first device 110 transmits the control UI information to the second device 120, the first device 110 may determine the temporary control authorization level of the second device 120 with respect to the first through nth external devices 130_1∼130_n and transmit the control UI information to the second device 120 according to the determined temporary control authorization level.

For example, when the first through nth external devices 130_1∼130_n are the DTV, the BDP, and the PC as illustrated in FIG. 2 and the temporary control authorization level of the second device 120 determined by the first device 110 is partial, the control UI information transmitted from the first device 110 to the second device 120 may include the information regarding the first through nth external devices 130_1∼130_n and the function information included in the partial item of FIG. 2.

The control UI information determined according to the temporary control authorization level with respect to the first through nth external devices 130_1∼130_n is not limited to that illustrated in FIG. 2. For example, when the temporary control authorization level of the second device 120 with respect to the first through nth external devices 130_1∼130_n is a highest level, the control UI information used to control the whole function of the first through nth external devices 130_1∼130_n may be transmitted to the second device 120. When the temporary control authorization level of the second device 120 with respect to the first through nth external devices 130_1∼130_n is a middle level, the control UI information used to control a power on/ off function of the first through nth external devices 130_1∼130_n may be transmitted to the second device 120. When the temporary control authorization level of the second device 120 with respect to the first through nth external devices 130_1∼130_n is a lowest level, the control UI information used to control a basic function of one (for example, the first external device 130_1) of the first through nth external devices 130_1∼130_n may be transmitted to the second device 120.

The temporary control authorization level of the second device 120 may be determined for each of the first through nth external devices 130_1∼130_n. The temporary control authorization level of the second device 120 may be the temporary control authorization level capable of controlling an external device selected by the second device 120.

When a user of the second device 120 is an unregistered user, the user control interface information of the first through nth external devices 130_1∼130_n that is transmitted to the second device 120 may include control UI information that is set or designated by the user of the first device 110.

When the control UI information of the first through nth external devices 130_1∼130_n that is provided by the first device 110 and the second device 120 is Augmented Reality (AR) information, the AR information may be acquired by using a camera included in the first device 110.

That is, when images of the first through nth external devices 130_1∼130_n are acquired by using the camera included in the first device 110, the information (for example, identification information) regarding the first through nth external devices 130_1∼130_n is recognized by applying an object recognition technology to the acquired images. The object recognition technology may use a method of extracting a feature of an image of an object, comparing the extracted feature with a stored feature of the object, and recognizing the object but is not limited thereto.

The first device 110 searches for additional information regarding the recognized first through nth external devices 130_1∼130_n in an external device information database by using the recognized information regarding the first through nth external devices 130_1∼130_n. The external device information database may be included in the first device 110 or may be included in a database server outside the first device 110. This external database server may be the server 160. The external device information database may be included in the gateway 150.

The additional information found by the first device 110 may include types of the first through nth external devices 130_1∼130_n, names thereof, network addresses thereof, a control command list thereof, and status information thereof but is not limited thereto. The first device 110 generates an image including the AR based information by using an object tracking technology based on the additional information and the identification information of the first through nth external devices 130_1∼130_n. The object tracking technology may be performed based on a sensor included in the first device 110 and/or based on a computer vision but is not limited thereto. The image including the AR based information may be included in the control UI information and transmitted to the second device 120.

The control UI information of the first through nth external devices 130_1∼130_n that is provided by the first device 110 and the second device 120 may be provided as a 2 Dimensional (2D) or 3D plane layout (or a device layout or a home plan view) based on physical locations of the first through nth external devices 130_1∼130_n.

The control UI information may include temporary control authorization period information of the second device 120 regarding the first through nth external devices 130_1∼130_n. For example, when an interactive service period is set as a temporary control authorization period by using the first device 110, the temporary control authorization period is set as one hour from a time when temporary control is authorized, or the temporary control is authorized at a specified time cycle, the first device 110 may transmit the control UI information including the set temporary control authorization period information to the second device 120 or transmit the set temporary control authorization period information along with the control UI information.

The specific time cycle may be set to repeat according to year/month/week/days but is not limited thereto. For example, the specific time cycle may be set to control a boiler in a father's house at 8 a.m. every day or may be set to control a door of the house from a time when a child gets home to a time when a parent gets home. The temporary control authorization period of the second device 120 may be set when the temporary control is authorized with respect to the second device 120 but is not limited thereto.

When the temporary control is authorized to the second device 120, the first device 110 may display the temporary control authorization level provided to the second device 120 or may display a list of the first through nth external device 130_1∼130_n for which the temporary control is authorized to the second device 120 and a list of controllable functions.

The second device 120 is not authorized to control the first through nth external devices 130_1∼130_n. However, since the second device 120 is authorized to temporarily control the first through nth external devices 130_1∼130_n, the second device 120 may control the first through nth external devices 130_1∼130_n. The second device 120 may be authorized to temporarily control the first through nth external devices 130_1∼130_n according to at least one of a request of the user of the first device 110, a request of the user of the second device 120, requests of the first through nth external devices 130_1∼130_n, a request of the gateway 150, or a request of the server 160.

The second device 120 may include, for example, a smart phone, a smart TV, a PC, a desktop PC, a notebook, a smart board, a tablet PC, a phablet, a navigation device, a mobile device, a handheld device or a handheld PC, a media player, an e-book terminal, a PDA, a digital camera of inputting a touch based user gesture, and a digital CE device (for example, an image display or a device having a function of inputting the touch based user gesture), but is not limited thereto.

The second device 120 may be selected through a contact information management application such as a phone book or an address book of the first device 110 or an application that calls or is synchronized with the contact information management application. The application used to select the second device 120 is not limited thereto.

When the first device 110 and the second device 120 perform an interactive service therebetween, an operation of selecting the second device 120 may be omitted and a temporary control authorization for the first through nth external devices 130_1∼130_n may be provided. When the interactive service is performed, when the temporary control authorization for the first through nth external devices 130_1∼130_n is requested, the temporary control authorization for the first through nth external devices 130_1∼130_n is automatically provided to a counterpart device, but is not limited thereto.

The first through nth external devices 130_1∼130_n may or may not be connected to the first device 110. When the first through nth external devices 130_1∼130_n are not connected to the first device 110, the first device 110 may store the information regarding the first through nth external devices 130_1∼130_n. The information regarding the first through nth external devices 130_1∼130_n may include related application information and network connection information but is not limited thereto. That is, the information regarding the first through nth external devices 130_1∼130_n may include types of the first through nth external devices 130_1∼130_n, names thereof, network addresses thereof, a control command list thereof, and status information thereof as described above but is not limited thereto.

The first device 110 may acquire the information regarding the first through nth external devices 130_1∼130_n through first short distance communication and open (or setup or connect (or pair)) a communication session with the first through nth external devices 130_1∼130_n based on the acquired information through second short distance communication as illustrated in FIGS. 4 through 7.

The first short distance communication is communication performed between the first device 110 and the first through nth external devices 130_1∼130_n to open the communication session used to control the first through nth external devices 130_1∼130_n. The second short distance communication is communication performed between the first device 110 and the first through nth external devices 130_1∼130_n after the first device 110 opens the communication session used to control the first through nth external devices 130_1∼130_n.

FIG. 4 is a flowchart of a process of opening a communication session between the first device 110 and the first through nth external devices 130_1∼130_n according to an embodiment of the present disclosure.

Referring to FIG. 4, first short distance communication is performed through Near Field Communication (NFC), and second short distance communication is performed by using a relay function of the gateway 150. When an Access Point (AP) that performs the relay function is set up independently in the gateway 150, the second short distance communication may be performed through the AP.

In operation S401, when a distance between the first device 110 and the first through nth external devices 130_1∼130_n is within a NFC communication range, in operation S402, the first device 110 and the first through nth external devices 130_1∼130_n recognize that first short distance communication takes place.

In operation S403, the first through nth external devices 130_1∼130_n transmit information regarding a second short distance communication connection and application information related to the first through nth external devices 130_1∼130_n to the first device 110 through NFC.

In operation S404, the first device 110 authenticates the first through nth external devices 130_1∼130_n. The first through nth external devices 130_1∼130_n may be authenticated by authenticating previously agreed authentication information that is received from the first through nth external devices 130_1∼130_n. Thus, in operation S403, the first device 110 may receive the authentication information from the first through nth external devices 130_1∼130_n. If the first device 110 does not receive the authentication information from the first through nth external devices 130_1∼130_n in operation S403 and does not perform an authentication operation on the first through nth external devices 130_1∼130_n, operation S404 may be omitted.

In an embodiment in which the first through nth external devices 130_1∼130_n are authenticated, if the first device 110 does not receive the authentication information from the first through nth external devices 130_1∼130_n or receives wrong authentication information therefrom, the first device 110 may stop the process of opening the communication session with the first through nth external devices 130_1∼130_n.

In operation S405, the first device 110 determines second short distance communication with the first through nth external devices 130_1∼130_n based on the received information regarding the second short distance communication connection. The second short distance communication may be determined based on information indicating a communication method received from the first through nth external devices 130_1∼130_n.

For example, if the information indicating the communication method received from the first through nth external devices 130_1∼130_n includes information indicating Bluetooth communication, the first device 110 determines the second short distance communication with the first through nth external devices 130_1∼130_n as the Bluetooth communication. If the information indicating the communication method received from the first through nth external devices 130_1∼130_n includes information indicating infrastructure mode wireless Local Area Network (LAN) communication, the first device 110 determines the second short distance communication with the first through nth external devices 130_1∼130_n as the infrastructure mode wireless LAN communication.

In the current process, the second short distance communication of the first through nth external devices 130_1∼130_n uses the gateway 150. Thus, in operation S406, the first device 110 transmits connection information of the gateway 150 to the first through nth external devices 130_1∼130_n.

In the current process, the first device 110 is not connected to the gateway 150 and stores the connection information related to the gateway 150 therein. The connection information related to the gateway 150 is necessary for connection to the gateway 150. For example, the connection information related to the gateway 150 may include a Service Set Identifier (SSID), channel information, security and authentication key information, encryption key information, an Internet Protocol (IP) address, a Media Access Control (MAC) address, etc. but is not limited thereto.

In operation S407, the first through nth external devices 130_1∼130_n request the gateway 150 for connection by using the received connection information related to the gateway 150. In operation S408, when the first through nth external devices 130_1∼130_n receive a connection acceptance signal from the gateway 150, in operation S409, the first through nth external devices 130_1∼130_n transmit a connection notification signal, to the first device 110, indicating that the first through nth external devices 130_1∼130_n are connected to the gateway 150.

In operation S410, the first device 110 transmits a connection request signal to the gateway 150 by using the connection information of the gateway 150. In operation S411, when the first device 110 receives a connection acceptance signal from the gateway 150, the first device 110 may open the communication session with the first through nth external devices 130_1∼130_n via the gateway 150. When the communication session is opened, the first device 110 may execute applications related to the first through nth external devices 130_1∼130_n.

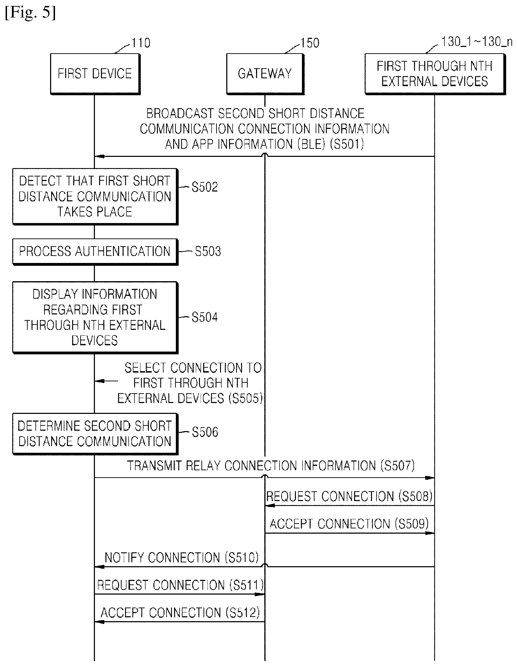

FIG. 5 is a flowchart of a process of opening a communication session between the first device 110 and the first through nth external devices 130_1∼130_n when first short distance communication uses BLE communication, and second short distance communication uses a relay according to an embodiment of the present disclosure.

In operation S501, the first device 110 receives information regarding a second short distance communication connection and application information related to the first through nth external devices 130_1∼130_n that are broadcast from the first through nth external devices 130_1∼130_n, and, in operation S502, recognizes that the first short distance communication takes place.

In operation S503, the first device 110 authenticates the first through nth external devices 130_1∼130_n. The first through nth external devices 130_1∼130_n may be authenticated by authenticating previously agreed authentication information that is received from the first through nth external devices 130_1∼130_n. Thus, in operation S501, the first device 110 may receive the authentication information from the first through nth external devices 130_1∼130_n. In an embodiment in which the first device 110 does not receive the authentication information from the first through nth external devices 130_1∼130_n in operation S501 and does not perform an authentication operation on the first through nth external devices 130_1∼130_n, operation S503 may be omitted.

In an embodiment in which the first through nth external devices 130_1∼130_n are authenticated, when the first device 110 does not receive the authentication information from the first through nth external devices 130_1∼130_n or receives wrong authentication information therefrom, the first device 110 may stop the process of opening the communication session with the first through nth external devices 130_1∼130_n.

In operation S504, the first device 110 displays information regarding the first through nth external devices 130_1∼130_n. To this end, in operation S501, the first through nth external devices 130_1∼130_n may transmit the information regarding the first through nth external devices 130_1∼130_n to the first device 110.

However, in operation S502, after the first device 110 recognizes that the first short distance communication takes place, the first device 110 may be configured to receive the authentication information and the information regarding the first through nth external devices 130_1∼130_n according to a transmission of an information request from the first device 110 to the first through nth external devices 130_1∼130_n.

In operation S505, when user information regarding a selection of connection to the first through nth external devices 130_1∼130_n is input based on the displayed information regarding the first through nth external devices 130_1∼130_n, in operation S506, the first device 110 determines the second short distance communication with the first through nth external devices 130_1∼130_n based on the information regarding the second short distance communication connection. The second short distance communication may be determined as described in operation S405 above.

In the current process, the second short distance communication of the first through nth external devices 130_1∼130_n uses the gateway 150. Thus, in operation S507, the first device 110 transmits connection information related to the gateway 150 to the first through nth external devices 130_1∼130_n.

In the current process, the first device 110 is not connected to the gateway 150 and stores the connection information related to the gateway 150 therein.

In operation S508, the first through nth external devices 130_1∼130_n transmit a connection request signal to the gateway 150 by using the received connection information related to the gateway 150. In operation S509, when the first through nth external devices 130_1∼130_n receive a connection acceptance signal from the gateway 150, in operation S510, the first through nth external devices 130_1∼130_n transmit a connection notification signal, to the first device 110, indicating that the first through nth external devices 130_1∼130_n are connected to the gateway 150.

In operation S511, the first device 110 transmits a connection request signal to the gateway 150 by using the connection information of the gateway 150. In operation S512, when the first device 110 receives a connection acceptance signal from the gateway 150, the first device 110 may open the communication session with the first through nth external devices 130_1∼130_n via the gateway 150.

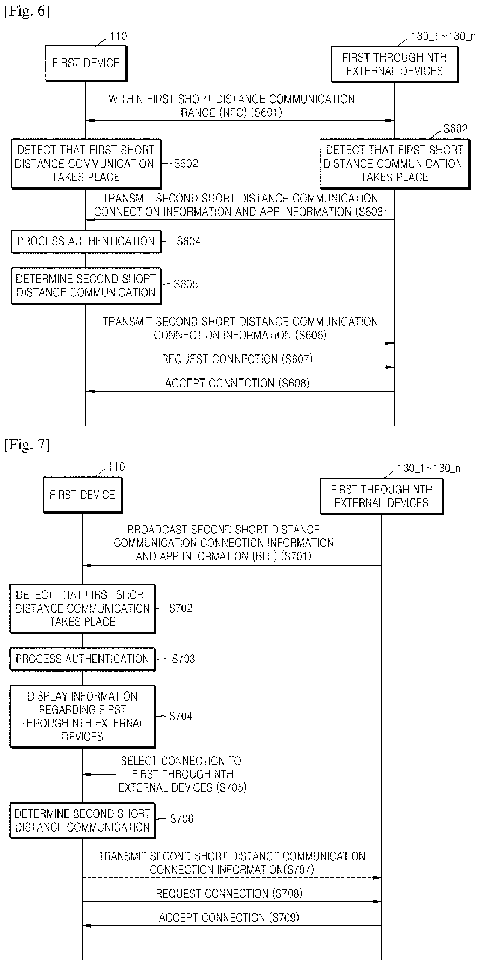

FIG. 6 is a flowchart of a process of opening a communication session between the first device 110 and the first through nth external devices 130_1∼130_n when first short distance communication uses NFC, and second short distance communication does not use the gateway 150 but uses direct communication between devices according to an embodiment of the present disclosure.

In operation S601, when a distance between the first device 110 and the first through nth external devices 130_1∼130_n is within a first short distance communication range, in operation S602, the first device 110 and the first through nth external devices 130_1∼130_n recognize that first short distance communication takes place.

In operation S603, the first through nth external devices 130_1∼130_n transmit information regarding a second short distance communication connection and application information related to the first through nth external devices 130_1∼130_n to the first device 110.

In operation S604, the first device 110 authenticates the first through nth external devices 130_1∼130_n. The first through nth external devices 130_1∼130_n may be authenticated by authenticating previously agreed authentication information that is received from the first through nth external devices 130_1∼130_n. Thus, in operation S603, the first device 110 may receive the authentication information from the first through nth external devices 130_1∼130_n. When the first device 110 does not receive the authentication information from the first through nth external devices 130_1∼130_n in operation S603 and does not perform an authentication operation on the first through nth external devices 130_1∼130_n, operation S604 may be omitted.

In an embodiment in which the first through nth external devices 130_1∼130_n are authenticated, when the first device 110 does not receive the authentication information from the first through nth external devices 130_1∼130_n or receives wrong authentication information therefrom, the first device 110 may stop the process of opening the communication session with the first through nth external devices 130_1∼130_n.

In operation S605, the first device 110 determines the second short distance communication with the first through nth external devices 130_1∼130_n based on the received information regarding the second short distance communication connection. The second short distance communication may be determined as described above.

In the current process, the second short distance communication of the first through nth external devices 130_1∼130_n does not use the gateway 150 but uses direct communication between devices. Thus, in operation S606, the first device 110 may transmit information of the first device 110 required to request direct communication between devices to the first through nth external devices 130_1∼130_n by using NFC. Thus, the first through nth external devices 130_1∼130_n may attempt direct communication between devices with the first device 110 in advance by using the information of the first device 110.

The flowchart of FIG. 6 may be modified not to include operation S606 so that the first device 110 only may attempt direct communication between devices. In operation S607, the first device 110 transmits a connection request signal to the first through nth external devices 130_1∼130_n based on the information regarding a second short distance communication connection of the first through nth external devices 130_1∼130_n. In operation S608, when the first device 110 receives a connection acceptance signal from the first through nth external devices 130_1∼130_n, the first device 110 may open the communication session with the first through nth external devices 130_1∼130_n.

FIG. 7 is a flowchart of a process of opening a communication session between the first device 110 and the first through nth external devices 130_1∼130_n when first short distance communication uses BLE communication, and second short distance communication does not use the gateway 150 but uses direct communication between devices according to an embodiment of the present disclosure.

In operation S701, the first device 110 receives information regarding a second short distance communication connection and application information related to the first through nth external devices 130_1∼130_n that are broadcast from the first through nth external devices 130_1∼130_n, and, in operation S702, recognizes that the first short distance communication takes place. In operation S701, the first through nth external devices 130_1∼130_n may not transmit the application information.

In operation S703, the first device 110 authenticates the first through nth external devices 130_1∼130_n. The first through nth external devices 130_1∼130_n may be authenticated by authenticating previously agreed authentication information that is received from the first through nth external devices 130_1∼130_n. Thus, in operation S701, the first device 110 may receive the authentication information from the first through nth external devices 130_1∼130_n. When the first device 110 does not receive the authentication information from the first through nth external devices 130_1∼130_n in operation S701 and does not perform an authentication operation on the first through nth external devices 130_1∼130_n operation S703 may be omitted.

In an embodiment in which the first through nth external devices 130_1∼130_n are authenticated, when the first device 110 does not receive the authentication information from the first through nth external devices 130_1∼130_n or receives wrong authentication information therefrom, the first device 110 may stop the process of opening the communication session with the first through nth external devices 130_1∼130_n.

In operation S704, the first device 110 displays information regarding the first through nth external devices 130_1∼130_n. To this end, in operation S701, the first through nth external devices 130_1∼130_n may transmit the information regarding the first through nth external devices 130_1∼130_n to the first device 110.

However, in operation S702, after the first device 110 recognizes that the first short distance communication takes place, the first device 110 may be configured to receive the authentication information and the information regarding the first through nth external devices 130_1∼130_n from the first through nth external devices 130_1∼130_n according to a transmission of an information request for the first through nth external devices 130_1∼130_n from the first device 110 to the first through nth external devices 130_1∼130_n.

In operation S705, when user information regarding a selection of connection to the first through nth external devices 130_1∼130_n is input based on the displayed information regarding the first through nth external devices 130_1∼130_n, in operation S706, the first device 110 determines the second short distance communication with the first through nth external devices 130_1∼130_n based on the information regarding the second short distance communication connection. The second short distance communication may be determined as described in operation S405 of FIG. 4 above.

In the current process, the second short distance communication of the first through nth external devices 130_1∼130_n does not use the gateway 150 but uses direct communication between devices. Thus, in operation S707, the first device 110 may transmit information of the first device 110 required to request direct communication between devices to the first through nth external devices 130_1∼130_n by using BLE communication. Thus, the first through nth external devices 130_1∼130_n may attempt direct communication between devices with the first device 110 in advance by using the information of the first device 110 in the future.

The flowchart of FIG. 7 may be modified not to include operation S707 in such a manner that the first device 110 only may attempt direct communication between devices.

In operation S708, the first device 110 transmits a connection request signal to the first through nth external devices 130_1∼130_n based on the information regarding a second short distance communication connection of the first through nth external devices 130_1∼130_n. In operation S709, when the first device 110 receives a connection acceptance signal from the first through nth external devices 130_1∼130_n, the first device 110 may open the communication session with the first through nth external devices 130_1∼130_n.

In the processes of FIGS. 4 through 7, the communication session between the first device 110 and the first through nth external devices 130_1∼130_n is opened in wireless communication. However, the communication session between the first device 110 and the first through nth external devices 130_1∼130_n is not limited to the wireless communication. For example, the communication session between the first device 110 and the first through nth external devices 130_1∼130_n may be opened in wired communication.

The network 140 may include a network used to open a communication session between the first device 110 and the second device 120 through short distance communication such as Bluetooth communication, WiFi direct communication, etc. and a network used to open an interactive service based communication session such as chatting, a video call, and a voice call. The network 140 may further include a network used to open a communication session between the second device 120 and the gateway 150, between the first device 110 and the server 160, and between the second device 120 and the server 160.

The network 140 may further include a network used to open a communication session between the first device 110 and the second device 120 in at least one of machine-to-machine (M2M) communication, device-to-device (D2D) communication, and peer to peer (P2P) communication.

The network 140 may be configured as a wireless communication network or a wired communication network.

The wireless communication network may include at least one of wireless networks such as a Wireless Local Area Network (WLAN) (for example, WiFi direct or ad-hoc mode wireless LAN) that does not use an AP, a Zigbee network, a Bluetooth network, an Infrared Data Association (IrDA) network, a RFID network, a NFC based network, a WLAN (for example, WiFi or infrastructure mode wireless LAN) that uses the AP, 3G/4G Long Term Evolution (LTE) based networks, Internet, wireless Intranet, a wireless phone network, and a Ultra WideBand (UWB) network, but is not limited thereto.

The wired communication network may include at least one of a phone line method (for example, home Phoneline Network aAliance (PNA), a power line method (for example, HomePlug, LongWorks, and HNCP), an Ethernet method (for example, IEEE 802.3), and a structured wiring method, but is not limited thereto.

The gateway 150 relays communication between the first device 110 and the first through nth external devices 130_1∼130_n, communication between the second device 120 and the first through nth external devices 130_1∼130_n, and communication between the server 160 and the first through nth external devices 130_1∼130_n as described with reference to FIGS. 4 and 5.

When a network that is connected between the first device 110, the first through nth external devices 130_1∼130_n, and the gateway 150 is a home based local area network, the gateway 150 may be referred to as a home gateway.

The gateway 150 may include a wireless relay function. The gateway 150 may be synchronized with a WLAN. The gateway 150 may include a wired/wireless Internet share function including an Internet share function. The gateway 150 may include an AP having a wireless and wired interfacing function or a wireless sharer having an AP and Internet share function.

When a network that is connected between the first device 110 and the first through nth external devices 130_1∼130_n is a local area network, the gateway 150 may be referred to as a gateway that relays between the local area network and the network 140.

The server 160 may include at least one of a public cloud, a private cloud, an Authentication Authorization Accounting (AAA) server, and an authentication server of a smart home business provider. The server 160 may store information regarding a device that may be authorized to temporarily control the first through nth external devices 130_1∼130_n and information regarding the first through nth external devices 130_1∼130_n therein. The information regarding the first through nth external devices 130_1∼130_n may include the information regarding the first through nth external devices 130_1∼130_n that is described with reference to FIGS. 4 through 7. The information regarding the device that may be authorized to temporarily control the first through nth external devices 130_1∼130_n and the information regarding the first through nth external devices 130_1∼130_n may be stored in the first device 110 and/or the gateway 150.

When the communication session between the first device 110 and the second device 120 is not opened, the first device 110 transmits the information regarding the first through nth external devices 130_1∼130_n to the second device 120 by executing a contact information management application such as a phone book or an address book of the first device 110 or an application synchronized with the contact information management application, and thus the second device 120 may be authorized to temporarily control the first through nth external devices 130_1∼130_n.

Alternatively, the second device 120 requests authorization to temporarily control the first through nth external devices 130_1∼130_n from the first device 110 by executing the contact information management application or the application synchronized with the contact information management application by using the second device 120, the second device 120 may be authorized to temporarily control the first through nth external devices 130_1∼130_n.

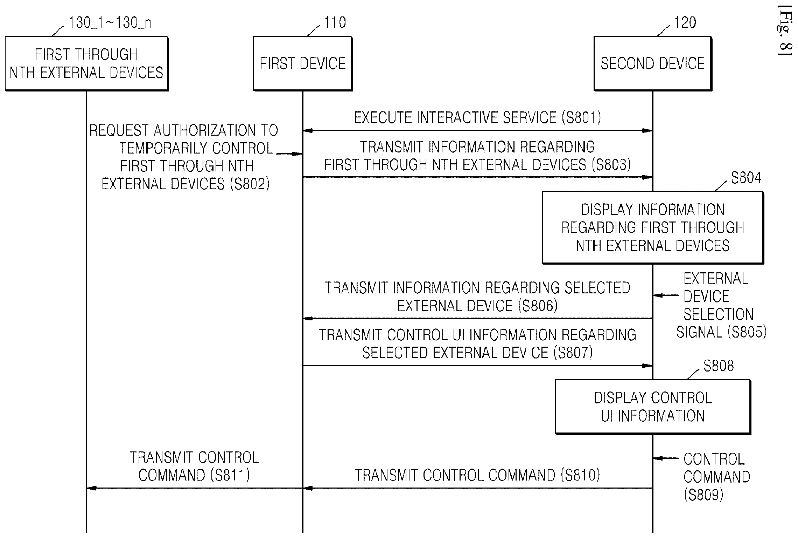

FIG. 8 is a flowchart of an external device control method according to an embodiment of the present disclosure.

Referring to FIG. 8, when an interactive service is performed between the first device 110 and the second device 120, authorization to temporarily control at least one external device is requested by a user of the first device 110.

In operation S801, when the interactive service is performed between the first device 110 and the second device 120, when a request for authorization to temporarily control the first through nth external devices 130_1∼130_n is input by the user of the first device 110 in operation S802, the first device 110 transmits information regarding the first through nth external devices 130_1∼130_n to the second device 120 in operation S803. The information regarding the first through nth external devices 130_1∼130_n may include the information regarding the first through nth external devices 130_1∼130_n described with reference to FIG. 1 above.

The request for the authorization to temporarily control the first through nth external devices 130_1∼130_n by the first device 110 may be input by controlling a temporary control authorization request key included in the first device 110, by selecting a temporary control authorization request menu item based on a touch or a motion, or by using a voice signal (for example, temporary control authorization is requested) of the user of the first device 110.

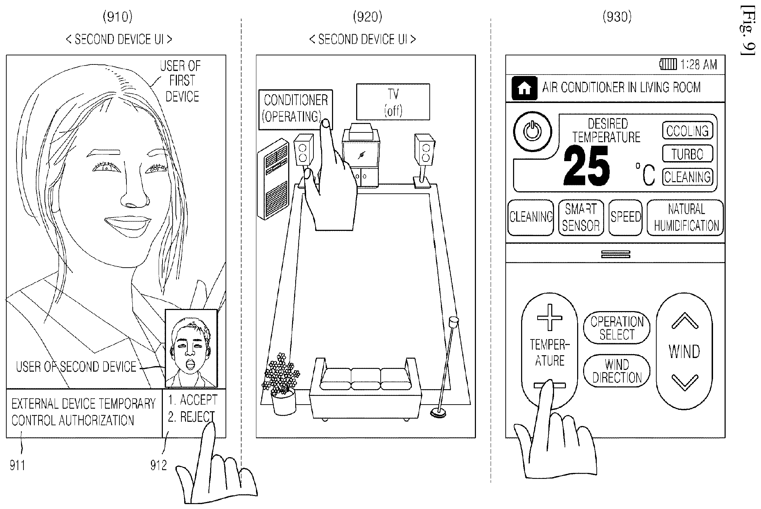

Thus, the second device 120 displays the information regarding the first through nth external devices 130_1∼130_n in operation S804. FIG. 9 illustrates screens 910, 920, and 930 displayed on the second device 120 when a video call service is performed according to an embodiment of the present disclosure.

Referring to FIG. 9, the second device 120 may display a temporary control authorization notification message with respect to the first through nth external devices 130_1∼130_n on a region 911 of the screen 910 and may display a menu 912 including items for accepting and rejecting the temporary control authorization with respect to the first through nth external devices 130_1∼130_n in operation S804.

When the item of accepting the temporary control authorization with respect to the first through nth external devices 130_1∼130_n is selected from the menu 912, the screen 910 displayed on the second device 120 is changed to the screen 920. The screen 920 illustrates that the information regarding the first through nth external devices 130_1∼130_n is provided as AR based information. Identification information and status information of the first through nth external devices 130_1∼130_n are further displayed on the screen 920. However, the information regarding the first through nth external devices 130_1∼130_n is not limited to that displayed on the screen 920. That is, only the identification information of the first through nth external devices 130_1∼130_n may be displayed as the information regarding the first through nth external devices 130_1∼130_n.

In this regard, the first device 110 and the second device 120 remain in a video call status. Thus, the screen 920 of FIG. 9 may be transmitted by calling a camera application of the first device 110 and capturing a device whose control is desired while the user of the first device 110 is on the video call to the second device 120, but is not limited thereto. The screen 910 and the screen 920 may be included in a single screen. For example, a screen displayed on the screen 920 may be displayed as a background screen of the screen 910. In this case, the information regarding the first through nth external devices 130_1∼130_n that is displayed on the screen 920 may be displayed as a region that may be selected from an uppermost layer.

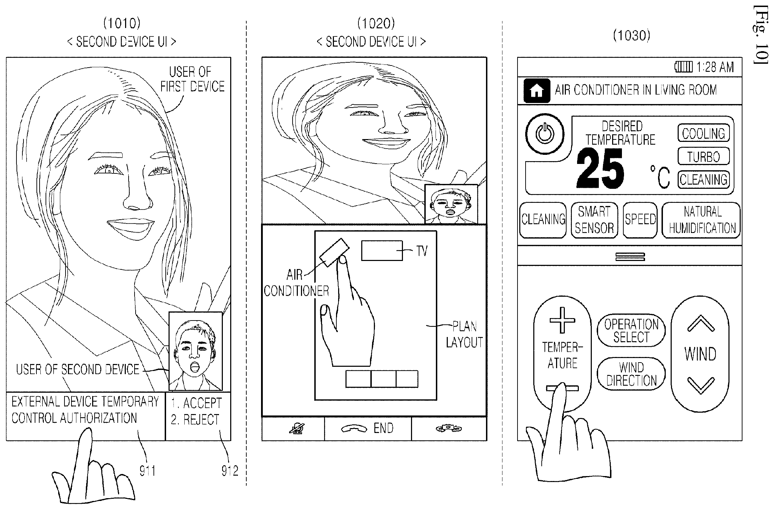

FIG. 10 illustrates screens displayed on the second device 120 when a video call service is performed according to another embodiment of the present disclosure.

Referring to FIG. 10, information regarding the first through nth external devices 130_1∼130_n is provided as a physical location based plan layout. Screen 1010 is similar in function to screen 910 of FIG. 9. A 2D plan layout of the first through nth external devices 130_1∼130_n may be displayed on the second device 120 like a screen 1020. In this regard, the 2D plan layout may be displayed on a region of the screen 1020 that splits from a video call service screen. The video call service screen and the 2D plan layout may be displayed in Picture-In-Picture (PIP) form or the 2D plan layout only may be displayed. In this regard, the video call service is maintained between the first device 110 and the second device 120, and thus a video call based voice signal may be continuously output.

When a selection signal based on AR based information with respect to the first through nth external devices 130_1∼130_n like the menu 920 of FIG. 9 is received in operation S805, the second device 120 transmits information regarding a selected external device to the first device 110 in operation S806. The selection signal based on the AR based information with respect to the first through nth external devices 130_1∼130_n may be received, for example, by a long touch on the information regarding the first through nth external devices 130_1∼130_n that is included in the screen 920 displayed on the second device 120. However, a method of receiving the selection signal with respect to the first through nth external devices 130_1∼130_n is not limited thereto. For example, the selection signal with respect to the first through nth external devices 130_1∼130_n may be received according to a voice signal of a user like an "air conditioner".

The first device 110 transmits control UI information regarding the selected external device to the second device 120 in operation S807. Thus, the second device 120 displays the received control UI information in operation S808. That is, when the air conditioner is selected on the screen 920 of FIG. 9, in operation S808, the second device 120 may display control UI information regarding the air conditioner like the screen 930 or 1030. However, the displayed control UI information regarding the selected external device in operation S808 is not limited to the screen 930 of FIG. 9.

When a control command is input to the second device 120 based on the displayed control UI information in operation S809, the second device 120 transmits the control command to an external device corresponding to the air conditioner from among the first through nth external devices 130_1∼130_n through the first device 110 in operations S810 and S811. In this regard, the first device 110 may relay between the external device corresponding to the air conditioner from among the first through nth external devices 130_1∼130_n and the second device 120.

The flowchart of FIG. 8 may be modified so that the second device 120 directly inputs the control command to the external device corresponding to the air conditioner from among the first through nth external devices 130_1∼130_n. The flowchart of FIG. 8 may be modified so that the second device 120 inputs the control command to the external device corresponding to the air conditioner from among the first through nth external devices 130_1∼130_n via the gateway 150 or the server 160. When the control command is directly input to the external device, the second device 120 may open a communication session with the external device by using information regarding a communication session connection to the external device. When the control command is transmitted via the gateway 150 or the server 160, the second device 120 may provide information used to open the communication session with the external device to the gateway 150 or the server 160.

The flowchart of FIG. 8 may be modified so that when authorization to temporarily control the first through nth external devices 130_1∼130_n is requested, the first device 110 transmits a temporary control authorization request signal to the second device 120, and the second device 120 displays messages 911 and 912 on the screen 910 of FIG. 9 and transmits a temporary control authorization acceptance signal to the first device 110 based on the displayed messages 911 and 912 so that the first device 110 may transmit the information regarding the first through nth external devices 130_1∼130_n to the second device 120.

The flowchart of FIG. 8 may be modified so that the information regarding the selected external device is transmitted to the gateway 150 or the server 160 so that the second device 120 may receive control UI information regarding the selected external device from the gateway 150 or the server 160. In this case, the gateway 150 or the server 160 may have functions of managing control UI information regarding each of the first through nth external devices 130_1∼130_n. The gateway 150 or the server 160 may include temporary control authorization level information regarding the second device 120. The gateway 150 or the server 160 may provide the control UI information regarding the first through nth external devices 130_1∼130_n according to the temporary control authorization level information regarding the second device 120.

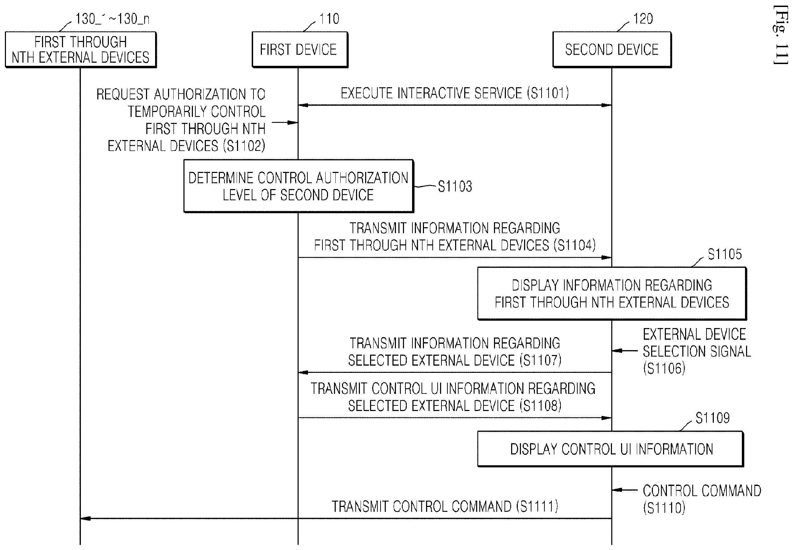

FIG. 11 is a flowchart of an external device control method according to another embodiment of the present disclosure.

Referring to FIG. 11, when an interactive service is performed between the first device 110 and the second device 120, the first device 110 determines a control authorization level of the second device 120 that is to be authorized to temporarily control at least one external device.

Operations S1101, S1102, and S1104 through S1110 of FIG. 11 are similar to operations S801 through S809 of FIG. 8, and thus descriptions thereof are omitted here to avoid redundancy.

In operation S1103, the first device 110 determines a temporary control authorization level based on user information of the second device 120. The determining of the temporary control authorization level is the same as determining of the control authorization level described with reference to FIGS. 1 through 3 above. Thus, in operation S1104, the first device 110 transmits information regarding the first through nth external devices 130_1∼130_n to the second device 120 according to the determined temporary control authorization level.

The flowchart of FIG. 11 may be modified so that a control command regarding a selected external device is transmitted from the second device 120 to the selected external device via the first device 110 or via the gateway 150 or the server 160 as described with reference to FIG. 8 above.

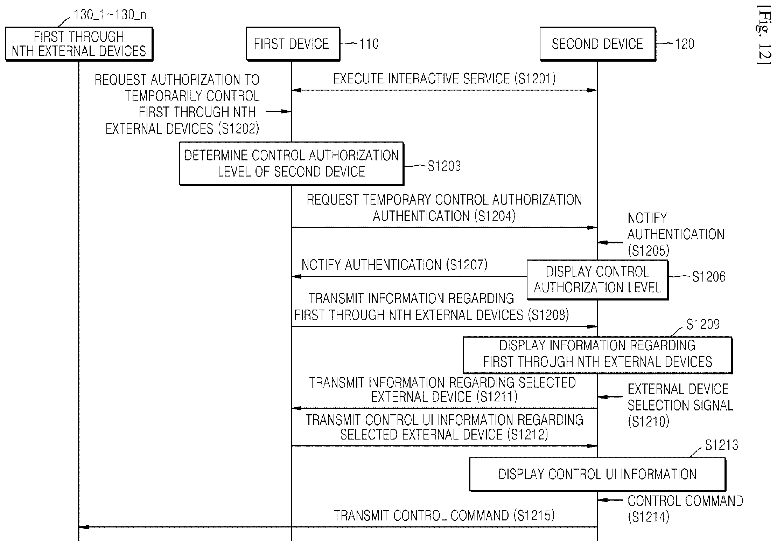

FIG. 12 is a flowchart of an external device control method according to another embodiment of the present disclosure.

Referring to FIG. 12, when an interactive service is performed between the first device 110 and the second device 120, authorization to temporarily control at least one external device is requested by a user of the first device 110, and control authorization level information regarding the second device 120 is displayed on the second device 120.

Operations S1201 through S1203 and S1208 through S1215 of FIG. 12 are similar to operations S1101 through S1111 of FIG. 11, and thus descriptions thereof are omitted here to avoid redundancy.

In operation S1204, the first device 110 transmits a temporary control authorization acceptance request signal to the second device 120. In this regard, the first device 110 may also transmit temporary control authorization level information of the second device 120 to the second device 120. When a user of the second device 120 accepts a temporary control authorization acceptance request in operation S1205, the second device 120 displays the temporary control authorization level information of the second device 120 in operation S1206 and transmits an acceptance notification signal to the first device 110 in operation 1207. Thus, in operation S1208, the first device 110 transmits information regarding the first through nth external devices 130_1∼130_n according to a temporary control authorization level of the second device 120 to the second device 120.

The flowchart of FIG. 12 may be modified so that when the first device 110 transmits the temporary control authorization acceptance request signal to the second device 120, the first device 110 displays the temporary control authorization level information of the second device 120, the information regarding the first through nth external devices 130_1∼130_n according to the temporary control authorization level of the second device 120, and information regarding controllable functions of the information regarding the first through nth external devices 130_1∼130_n thereon.

The flowchart of FIG. 12 may be modified so that a control command regarding a selected external device is transmitted from the second device 120 to the selected external device via the first device 110 or via the gateway 150 or the server 160.

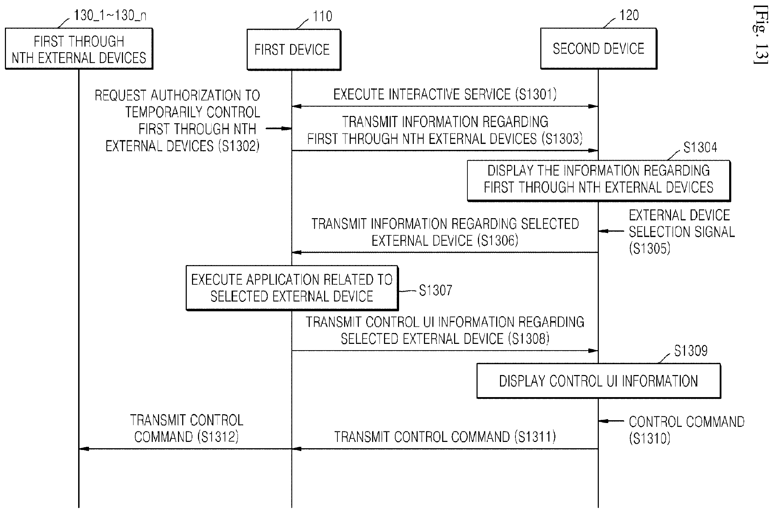

FIG. 13 is a flowchart of an external device control method according to another embodiment of the present disclosure.

Referring to FIG. 13, when an interactive service is performed between the first device 110 and the second device 120, the first device 110 executes an application related to an external device selected by the second device 120 that is authorized to temporarily control the first through nth external devices 130_1∼130_n.

Operations S1301 through S1306 and S1308 through S1312 of FIG. 13 are similar to operations S801 through S811 of FIG. 8, and thus descriptions thereof are omitted here to avoid redundancy.

In operation S1306, when information regarding the selected external device is received from the second device 120, the first device 110 executes the application related to the selected external device in operation 1307. In operation S1308, the first device 110 transmits control UI information regarding the selected external device to the second device 120 by using the executed application.

The flowchart of FIG. 13 may be modified so that a control command regarding the selected external device is transmitted from the second device 120 to the selected external device directly or via the gateway 150 or the server 160.

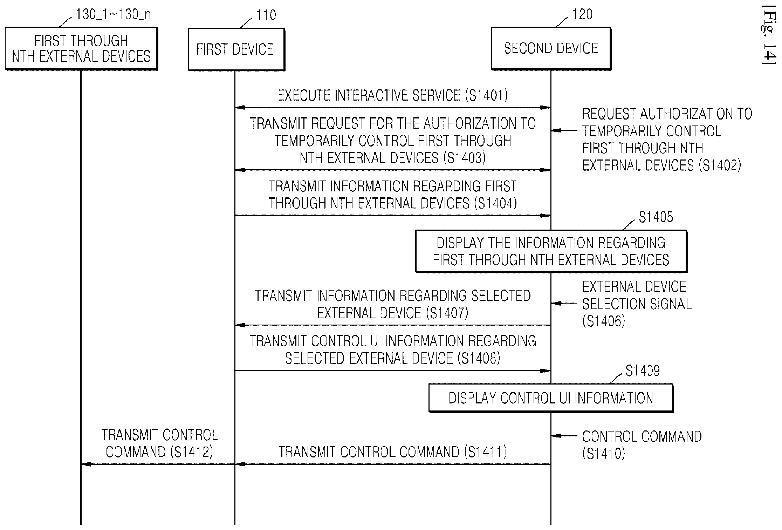

FIG. 14 is a flowchart of an external device control method according to another embodiment of the present disclosure.

Referring to FIG. 14, when an interactive service is performed between the first device 110 and the second device 120, authorization to temporarily control at least one of the first through nth external devices 130_1∼130_n is requested by a user of the second device 120.

Operations S1401 and S1404 through S1412 of FIG. 14 are similar to operations S801 and S803 through S811 of FIG. 8, and thus descriptions thereof are omitted here to avoid redundancy.

In operation S1402, when the authorization to temporarily control the first through nth external devices 130_1∼130_n, whose control is authorized with respect to the first device 110, is requested by the user of the second device 120, the second device 120 transmits a temporary control authorization request signal with respect to the first through nth external devices 130_1∼130_n to the first device 110 in operation S1403. Thus, the first device 110 transmits information regarding the first through nth external devices 130_1∼130_n to the second device 120 in operation S1404.

The flowchart of FIG. 14 may be modified so that a control command regarding the selected external device is transmitted from the second device 120 to the selected external device directly or via the gateway 150 or the server 160.

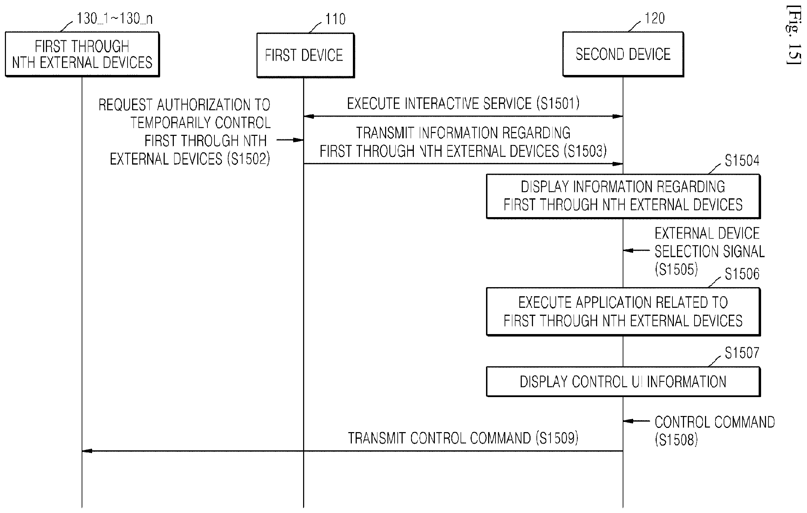

FIG. 15 is a flowchart of an external device control method according to another embodiment of the present disclosure.

Referring to FIG. 15, when an interactive service is performed between the first device 110 and the second device 120, authorization to temporarily control at least one of the first through nth external devices 130_1∼130_n is request by a user of the first device 110, and the second device 120 executes an application of a selected external device.

Operations S1501 through S1505 and S1507 through S1509 of FIG. 15 are similar to operations S801 through S805, S808, and S809 of FIG. 8, and thus descriptions thereof are omitted here to avoid redundancy.

In operation S1506, the second device 120 executes the application related to the external device selected by a user. In operation S1507, the second device 120 displays control UI information regarding the selected external device. The displayed control UI information regarding the selected external device may be provided from the application of the selected external device that is executed by the second device 120.

The second device 120 directly transmits a control command input in operation S1508 to the selected external device in operation S1509.

The flowchart of FIG. 15 may be modified so that the control command regarding the selected external device is transmitted from the second device 120 to the selected external device via the first device 110 or via the gateway 150 or the server 160.

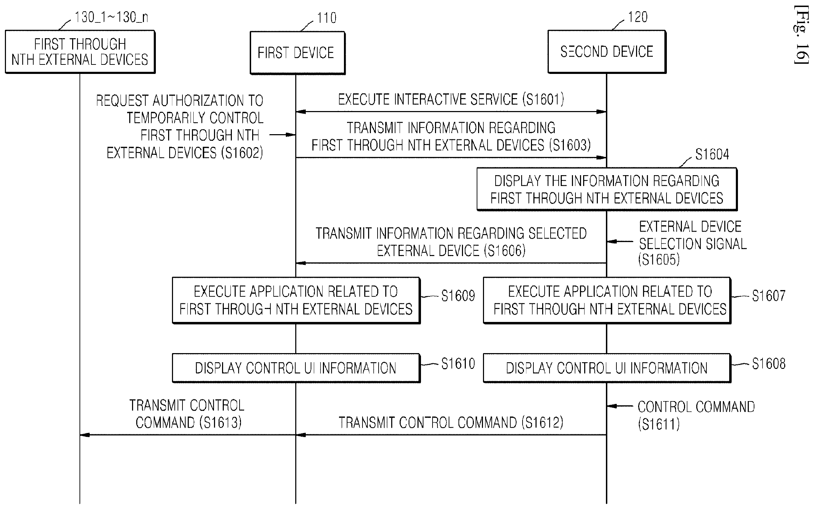

FIG.16 is a flowchart of an external device control method according to another embodiment of the present disclosure.

Referring to FIG. 16, when an interactive service is performed between the first device 110 and the second device 120, authorization to temporarily control the first through nth external devices 130_1∼130_n is requested by a user of the first device 110 and the first device 110 and the second device 120 execute an application of a selected external device.

Operations S1601 through S1606 and S1611 through S1613 of FIG. 16 are similar to operations S801 through S806 and S809 through S811 of FIG. 8, and thus descriptions thereof are omitted here to avoid redundancy.

In operation S1605, when the second device 120 receives information regarding the external device selected by a user, the second device 120 transmits the information regarding the selected external device to the first device 110 in operation S1606, and executes the application related to the selected external device in operation S1607. The second device 120 displays control UI information regarding the selected external device based on the executed application.

In operation S1609, the first device 110 executes an application related to an external device selected by the second device 120. In operation S1610, since the application related to the selected external device is executed, the first device 110 displays control UI information regarding the selected external device. Operations S1609 and S1610 performed by the first device 110 and operations S1607 and S1608 performed by the second device 120 may be simultaneously performed.

The user of the first device 110 and the user of the second device 120 may monitor a control command input in operation S1611 simultaneously while viewing the control UI information of the same external device. For example, if the control command is input in operation S1611, the second device 120 transmits the input control command to the first device 110 while changing the displayed control UI information according to the input control command in operation S1612. Thus, the first device 110 changes the displayed control UI information according to the received control command. The control UI information displayed on the second device 120 according to the input control command may be synchronized with the control UI information displayed on the first device 110.

The flowchart of FIG. 16 may be modified so that the first device 110 may transmit the input control command to the selected external device directly or via the gateway 150 or the server 160. In this regard, the second device 120 may transmit the control command to the first device 110 so as to synchronize the control UI information displayed on the first device 110 with the control UI information displayed on the second device 120.

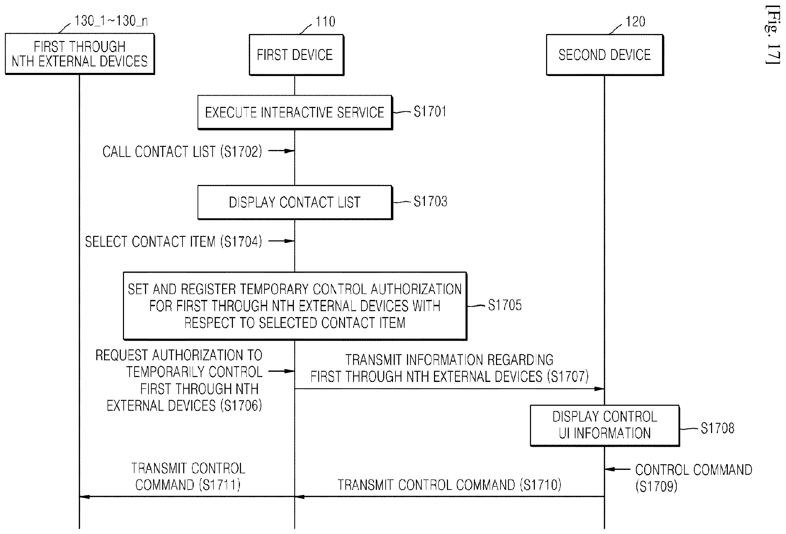

FIG. 17 is a flowchart of an external device control method according to another embodiment of the present disclosure.

Referring to FIG. 17, the first device 110 sets an object that is to be authorized to temporarily control at least one of the first through nth external devices 130_1∼130_n by executing an application capable of calling a contact list.

In operation S1701, the first device 110 executes the application capable of calling the contact list. The application executed in operation S1701 may include, for example, an application such as a chatting service, a video call service, and a voice call service but is not limited thereto. When the application executed in operation S1701 is the application providing the chatting service, the video call service, and the voice call service, the application may be executed in operation S1701 before attempting connection to a conversation counterpart but operation S1701 of executing the application is not limited thereto.

The application executed in operation S1701 is one of applications related to the first through nth external devices 130_1∼130_n that may include a function of calling the contact list.

The contact list may be based on information such as a phone book or an address book but is not limited thereto.

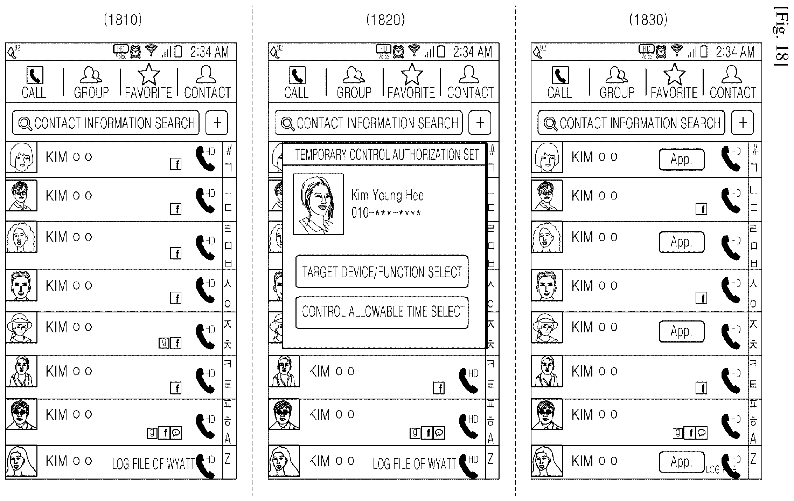

In operation S1702, when a user command for calling the contact list is input, the first device 110 displays the contact list in operation S1703. The contact list may be displayed like a screen 1810 of FIG. 18. FIG. 18 illustrates screens 1810, 1820, and 1830 displayed on the first device 110 according to the flowchart of FIG. 17, but the screens 1810, 1820, and 1830 displayed on the first device 110 are not limited thereto.

When one contact item is selected based on the displayed contact list in operation S1704, the first device 110 sets and registers temporary control authorization for at least one of the first through nth external devices 130_1∼130_n with respect to the selected contact item according to user input information in operation S1705.

That is, when one contact item is selected based on the contact list, the first device 110 may display a screen capable of setting and registering the temporary control authorization for at least one of the first through nth external devices 130_1∼130_n with respect to the selected contact item like the screen 1820 of FIG. 18.

Based on the screen 1820 of FIG. 18, a user of the first device 110 may set a target device (for example, at least one of the first through nth external devices 130_1∼130_n) for which temporary control authorization is set with respect to the selected contact item, a target function (for example, a temporary control authorization function among functions related to a selected target device), and a temporary control authorization allowable time (or a temporary control authorization allowable period). However, a temporary control authorization item that may be set with respect to the selected contact item is not limited thereto. For example, the temporary control authorization item that may be set with respect to the selected contact item may be set for only the target device.

When the temporary control authorization is completely set with respect to the selected contact item, the first device 110 stores mapping information between the selected contact item and the set temporary control authorization item. An operation of storing the mapping information between the selected contact item and the set temporary control authorization item may be an operation of registering the temporary control authorization with respect to the selected contact item. To store or register the mapping information, a temporary control authorization control window included in the screen 1820 of FIG. 18 may include a sub window (for example, a sub window including a command such as store, register, check, etc.) or a sub screen used to select or control the storing operation or the registering operation for the mapping information.

The first device 110 may display the screen 1830 of FIG. 18 according to the operation of registering the selected contact item in operation S1705. Application information related to at least one external device for which temporary control authorization is set with respect to a plurality of contact items may be displayed on the screen 1830 of FIG. 18. The at least one external device includes the first through nth external device 130_1∼130_n.

The screen 1830 of FIG. 18 indicates that the first device 110 executes the application related to one of the first through nth external devices 130_1∼130_n in operation S1701, and the target device for which a temporary control authorization is set with respect to the selected contact item in operation S1705 is an external device related to the application executed in operation S1701. A temporary control authorization range with respect to the first through nth external devices 130_1∼130_n for each contact item may be the same or different. For example, when a different temporary control authorization level is set for the same external device for each contact item, the temporary control authorization range may be different.

Application information App displayed on the screen 1830 of FIG. 18 is information indicating set temporary control authorization. The application information App displayed on the screen 1830 may be changed to information related to a target device for which temporary control authorization is set for each of selected contact items. In this case, the information related to the target device for which temporary control authorization is set for each of selected contact items may be known to the user of the first device 110.

When the first device 110 displays the contact list including the application information App indicating the set temporary control authorization like the screen 1830 of FIG. 18, in operation S1706, when a temporary control authorization request for at least one of the first through nth external devices 130_1∼130_n with respect to a contact item corresponding to the second device 120 is received, the first device 110 transmits control UI information based on the temporary control authorization range with respect to the registered external device to the second device 120 in operation S1707.

The second device 120 displays the received control UI information in operation S1708. When a control command is input based on the displayed control UI information in operation S1709, the second device 120 transmits the control command to the first device 110 in operation S1710. The first device 110 transmits the received control command to a corresponding external device and controls the external device in operation S1711.

The flowchart of FIG. 17 may include an operation of receiving temporary control authorization acceptance from the second device 120 when the temporary control authorization request is received in operation S1706. The flowchart of FIG. 17 may be modified so that the first device 110 may transmit the control command input by the second device 120 to the external device directly or via the gateway 150 or the server 160. The flowchart of FIG. 17 may be modified so that operation S1701 is omitted and operation S1702 of calling the contact list starts.

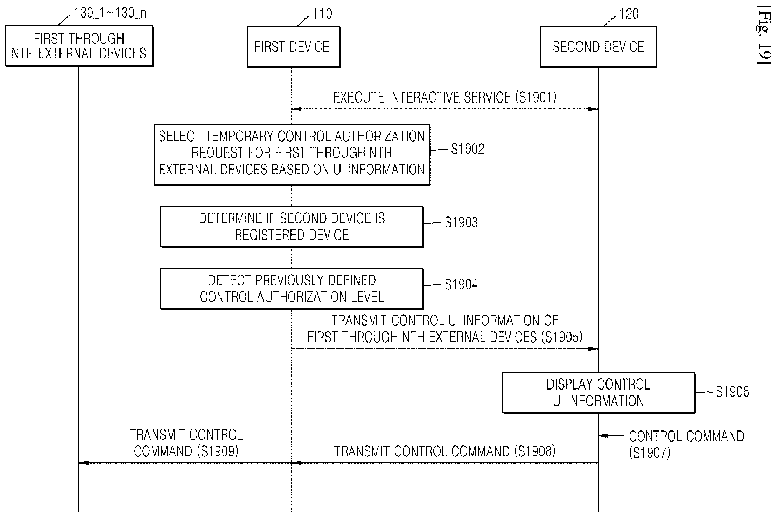

FIG. 19 is a flowchart of an external device control method according to another embodiment of the present disclosure.

Referring to FIG. 19, when an interactive service is performed between the first device 110 and the second device 120, the first device 110 determines if the second device 120 that is to be authorized to temporarily control the first through nth external devices 130_1∼130_n is a registered device. Operations S1905 through S1909 of FIG. 19 are similar to operations S1707 through S1711 of FIG. 17, and thus descriptions thereof are omitted here to avoid redundancy.

In operation S1901, when the interactive service is performed between the first device 110 and the second device 120, when a temporary control authorization request with respect to at least one of the first through nth external devices 130_1∼130_n is selected based on UI information of the first device 110 in operation S1902, the first device 110 determines if the second device 120 is the registered device in operation S1903.

The registered device is a pre-designated device to which temporary control may be authorized. It may be determined if the second device 120 is the registered device by checking if information regarding a device that is previously stored in the first device 110 and to which temporary control may be authorized includes information regarding the second device 120. It may be checked if the information regarding the device that is previously stored in the first device 110 and to which temporary control may be authorized includes information regarding the second device 120 by using identification information or user information of the second device 120.

When the second device 120 is the registered device, the first device 110 detects a previously defined temporary control authorization level of the second device 120 in operation S1904. The previously defined temporary control authorization level may be different for each of the first through nth external devices 130_1∼130_n. The first device 110 transmits control UI information of the first through nth external devices 130_1∼130_n according to the temporary control authorization level of the second device 120 to the second device 120 in operation S1905. In operation S1905, the first device 110 may transmit control UI information of at least one external device selected from the first through nth external devices 130_1∼130_n to the second device 120.

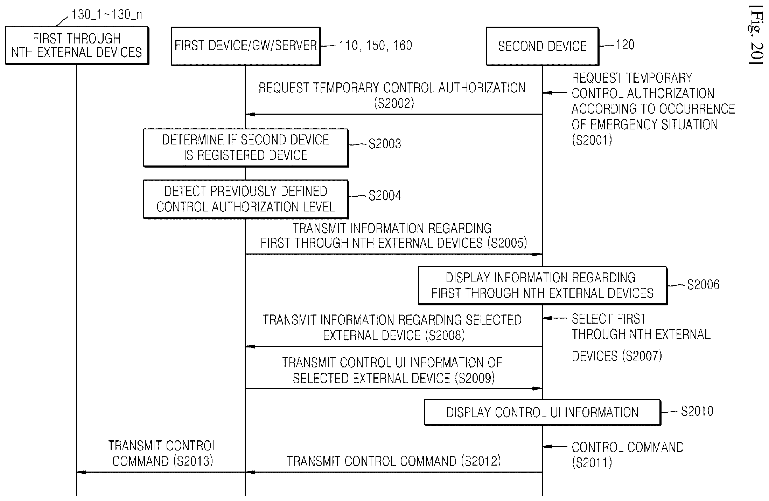

FIG. 20 is a flowchart of an external device control method according to another embodiment of the present disclosure.

Referring to FIG. 20, when an emergency situation takes place, authorization to temporarily control the first through nth external devices 130_1∼130_n is requested by the second device 120. The emergency situation may include a fire, a burglary, a medical emergency, an earthquake, and the like as described above, but is not limited thereto.

In operation S2001, when a temporary control authorization request command for the first through nth external devices 130_1∼130_n is input due to the occurrence of the emergency situation, the second device 120 transmits a temporary control authorization request signal to a subject having a control authorization in operation S2002.

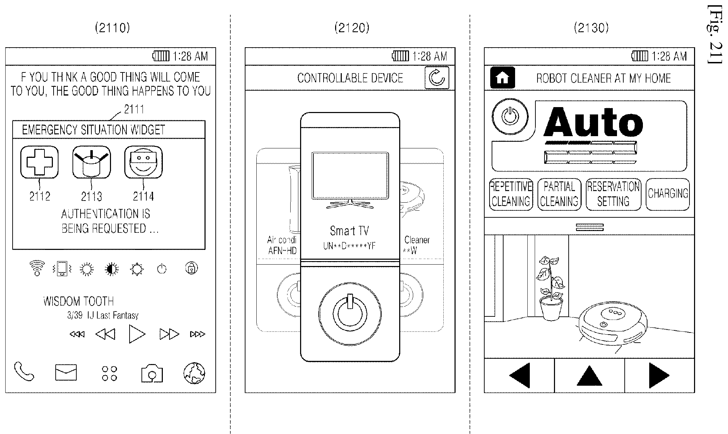

FIG. 21 illustrates screens 2110, 2120, and 2130 displayed on the second device 120 when temporary control authorization is requested due to the occurrence of the emergency situation according to an embodiment of the present disclosure. That is, when a user of the second device 120 inputs a command indicating that the emergency situation has occurred, the second device 120 displays a menu screen including emergency situation items. The screen 2110 of FIG. 21 displays the menu screen including the emergency situation items in a widget.

An emergency situation widget 2111 of the screen 2110 of FIG. 21 includes icons indicating emergency situations. The icons indicating emergency situations may include, for example, an icon 2112 indicating that a medical emergency has occurred, an icon 2113 indicating that there is a fire, an icon 2114 indicating that a burglary has occurred, an icon (not shown) indicating that an earthquake has occurred, and the like, but is not limited thereto. The emergency situation widget 2111 may display the ions indicating emergency situations in a list but is not limited thereto.

When an icon indicating that one emergency situation has occurred is selected based on the emergency situation widget 2111 of the screen 2110 of FIG. 21, the second device 120 transmits a temporary control authorization request signal to a previously registered control authorization management subject with respect to the selected icon. Thus, a message "authentication is being requested" may be output on a screen of the second device 120 but is not limited thereto. For example, a message "temporary control authentication is being requested" may be output on the screen of the second device 120. The control authorization management subject may include a device that is authorized to control the first through nth external devices 130_1∼130_n, a server, or a gateway.

The previously registered control authorization management subject may be one of the first device 110, the gateway 150, and the server 160 but is not limited thereto. A control authorization management subject with respect to each emergency situation may be previously set by a user or by the second device 120. A control authorization management subject that is previously set as a default subject may be changed by the user. For example, when the control authorization management subject that is previously set as the default subject may be the first device 110, the user may change the control authorization management subject that is previously set as the default subject to the gateway 150.

When a plurality of control authorization management subjects are previously set, the user may select the control authorization management subject from the plurality of control authorization management subjects. For example, when the first device 110, the gateway 150, and the server 160 are registered as control authorization management subjects when the medical emergency occurs, the user may select one of the first device 110, the gateway 150, and the server 160. The second device 120 may display the menu screen in such a way that the user may select one from the plurality of control authorization management subjects.

When the icon 2112 indicating that the medical emergency occurs is selected from the screen 2110 of FIG. 21, the temporary control authorization request signal is transmitted to the control authorization management subject (for example, one of the first device 110, the gateway 150, and the server 160) registered for a medical emergency occurrence situation. For convenience of description, the first device 110 will be described as the control authorization management subject. However, the control authorization management subject is not limited to the first device 110.

When the temporary control authorization request signal is received, the first device 110 determines if the second device 120 is a registered device in operation S2003. The registered device is a device for which temporary control is to be authorized as described above. A device that may be authorized to temporarily control the first through nth external devices 130_1∼130_n may be previously registered in the first device 110. A plurality of devices that may be authorized to temporarily control the first through nth external devices 130_1∼130_n may be previously registered in the first device 110.

As a result of the determining in operation S2003, if the second device 120 is the registered device, the first device 110 detects a previously set control authorization level of the second device 120 in operation S2004. In this regard, the detected control authorization level may be a temporary control authorization level. The first device 110 transmits information regarding the first through nth external devices 130_1∼130_n to the second device 120 according to the previously set control authorization level in operation S2005.

Thus, the second device 120 displays the received information regarding the first through nth external devices 130_1∼130_n in operation S2006. The second device 120 may display the received information regarding the first through nth external devices 130_1∼130_n in a list. However, the second device 120 may allocate a page to each of the first through nth external devices 130_1∼130_n and display the received information regarding the first through nth external devices 130_1∼130_n in a symbol image like the screen 2120 of FIG. 21. A smart TV may be selected from the screen 2120 of FIG. 21.

When a user of the second device 120 does not want to select the smart TV but wants to select another external device, information regarding a controllable external device may be displayed while moving pages according to a user gesture to move pages left or right or up or down. If there is one selectable external device, the second device 120 may disregard the user gesture to move pages or may display a guidance message indicating that there is no information regarding the selectable external device.

When one of the first through nth external devices 130_1∼130_n is selected according to the user gesture in operation S2007, the second device 120 transmits information regarding the selected external device to the first device 110 in operation S2008. Thus, the first device 110 transmits control UI information regarding the selected external device to the second device 120 in operation S2009. Since the selected external device is a robot cleaner in FIG. 21, control UI information regarding the robot cleaner may be transmitted in operation S2009.

The second device 120 displays the received control UI information in operation S2010. When a control command is input based on the displayed control UI information in operation S2011, the second device 120 transmits the control command to the selected external device from among the first through nth external devices 130_1∼130_n through the first device 110 in operations S2012 and S2013. The screen 2130 of FIG. 21 is an example screen displayed on the second device 120 since the control command is transmitted in a case where the selected external device is the robot cleaner, and a camera, a microphone, and a speaker of the robot cleaner are used to search for and talk to a patient according to the control command transmitted to the robot cleaner.

As a result of the determining in operation S2003, if the second device 120 is not the registered device, the first device 110 may transmit a message informing that the second device 120 is not the registered device to the second device 120 and may not authorize the second device 120 to temporarily control the first through nth external devices 130_1∼130_n. Alternatively, if the second device 120 is not the registered device, the first device 110 may transmit information regarding a registration process according to an authentication procedure to the second device 120.

The flowchart of FIG. 20 may be modified so that the first device 110 may transmit the control command from the second device 120 to the first through nth external devices 130_1∼130_n directly or via the gateway 150 or the server 160.

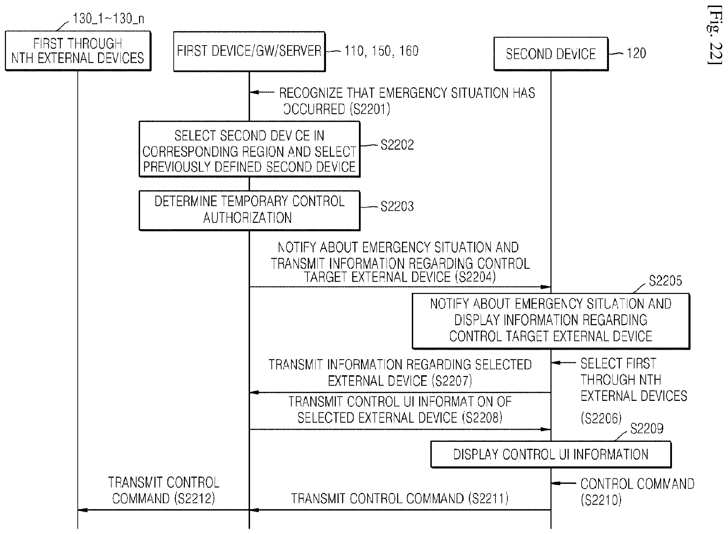

FIG. 22 is a flowchart of an external device control method according to another embodiment of the present disclosure.

Referring to FIG. 22, when a control authorization management subject of the first through nth external devices 130_1∼130_n recognizes that an emergency situation has occurred, the first through nth external devices 130_1∼130_n are controlled by determining a device that is to be authorized to temporarily control the first through nth external devices 130_1∼130_n.

The control authorization management subject of the first through nth external devices 130_1∼130_n of FIG. 22 includes at least one of the first device 110, the gateway 150, and the server 160. However, for convenience of description, the first device 110 will be described as the control authorization management subject of the first through nth external devices 130_1∼130_n of FIG. 22 below.

In operation S2201, the first device 110 recognizes that the emergency situation has occurred. The first device 110 may recognize that the emergency situation has occurred according to a user input of the first device 110 indicating that the emergency situation has occurred. However, it may be recognized that the emergency situation has occurred according to context awareness based on a sensor and/or a computer visual apparatus (for example, a camera) included in the first device 110 but the recognizing that the emergency situation has occurred is not limited thereto.

The first device 110 may select the second device 120 disposed in a region where the emergency situation is recognized to have occurred in operation S2202. In this case, the region where the emergency situation is recognized to have occurred is a physically long distance from a current location of the first device 110, and a current location of the second device 120 is a short distance from the region where the emergency situation is recognized to have occurred. For example, when the first device 110 is a fire management server and it is recognized that there is a fire in a region A, a long distance therefrom, the second device 120 is disposed in the region A. The second device 120 may be detected to be disposed in the A region based on Global Positioning System (GPS) information or AP contact device information but the detecting of the second device 120 to be disposed in the second device 120 in the A region is not limited thereto.

When the first device 110 recognizes that the emergency situation has occurred, the first device 110 may select the second device 120 that is previously defined in operation S2202. For example, when a user of the first device 110 is a patient, a user of the second device 120 is a doctor of the patient, and a medical emergency is recognized to have occurred according to a user input of the first device 110, the first device 110 may select the previously defined second device 120.

When the second device 120 is selected, the first device 110 determines that the selected second device 120 is authorized to temporarily control the first through nth external devices 130_1∼130_n in operation S2203. In this regard, the first device 110 may determine a temporary control authorization level of the second device 120. When it is determined that the selected second device 120 is authorized to temporarily control the first through nth external devices 130_1∼130_n, the first device 110 transmits an emergency situation notice and information regarding the first through nth external devices 130_1∼130_n that are temporary control targets to the second device 120 in operation S2204.

Thus, the second device 120 displays the received emergency situation notice and information regarding the first through nth external devices 130_1∼130_n that are temporary control targets in operation S2205. When a selection signal with respect to the first through nth external devices 130_1∼130_n is input in the second device 120 based on the displayed information regarding the first through nth external devices 130_1∼130_n in operation S2206, the second device 120 transmits information regarding a selected external device to the first device 110 in operation S2207.

The first device 110 transmits control UI information regarding the selected external device to the second device 120 in operation S2208. In this regard, the control UI information may be determined according to the temporary control authorization level of the second device 120.

The second device 120 displays the received control UI information in operation S2209. When a control command is input in the second device 120 based on the displayed control UI information in operation S2210, the second device 120 transmits the control command to the first device 110, and the first device 110 transmits the received control command to the selected external device in operations S2211 and S2212.

The flowchart of the FIG. 22 may be modified so that the user of the second device 120 directly transmits the input control command to the selected external device.

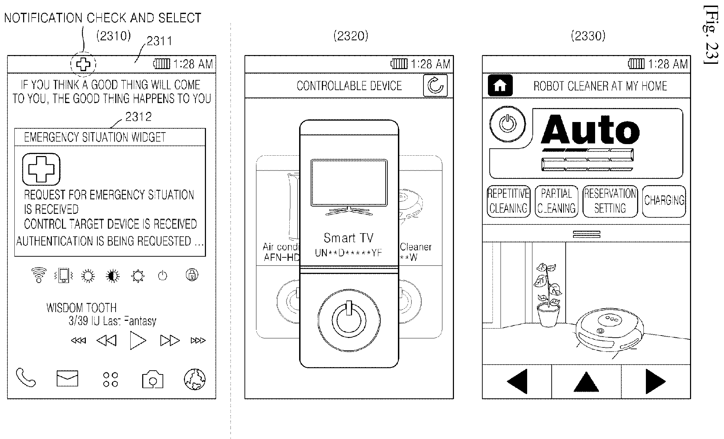

FIG. 23 illustrates screens 2310, 2320, and 2330 displayed on the second device 120 when the external device control method of FIG. 22 is performed according to an embodiment of the present disclosure.

Referring to the screen 2310, the second device 120 executes emergency situation notification reception in a background when the first device 110 recognizes that an emergency situation has occurred. When an emergency situation notification is recognized based on information displayed on a job tray 2311 of the second device 120, and information for selecting the emergency situation notification is input by a user of the second device 120, an emergency situation widget 2312 may be displayed on the second device 120.

When the emergency situation widget 2312 includes a plurality of icons like the emergency situation widget 2111 of FIG. 21, a display status of an icon corresponding to a current emergency situation notification may be different from a display status of an icon corresponding to another emergency situation notification that is unrelated to a current emergency situation. Thus, the user of the second device 120 may intuitively know the current emergency situation included in the current emergency situation notification. That is, the user of the second device 120 may intuitively know whether the current emergency situation notification indicates that an emergency patient, fire, or a burglary has occurred according to a display status of an icon included in the emergency situation widget 2312.

The emergency situation widget 2312 displayed on the second device 120 may include a message indicating a current situation. When information regarding controllable external devices is received, the second device 120 displays the information regarding the controllable external devices like the screen 2320 of FIG. 23. However, the information regarding the controllable external devices may be displayed in a list.

When an external device that may be controlled is selected by the second device 120 based on the displayed information regarding the controllable external devices, and a control command of the selected external device is input, the screen 2330 of FIG. 23 may be displayed like the screen 2130 of FIG. 21. However, a screen displayed on the second device 120 according to the control command is not limited to the screen 2330 of FIG. 23.

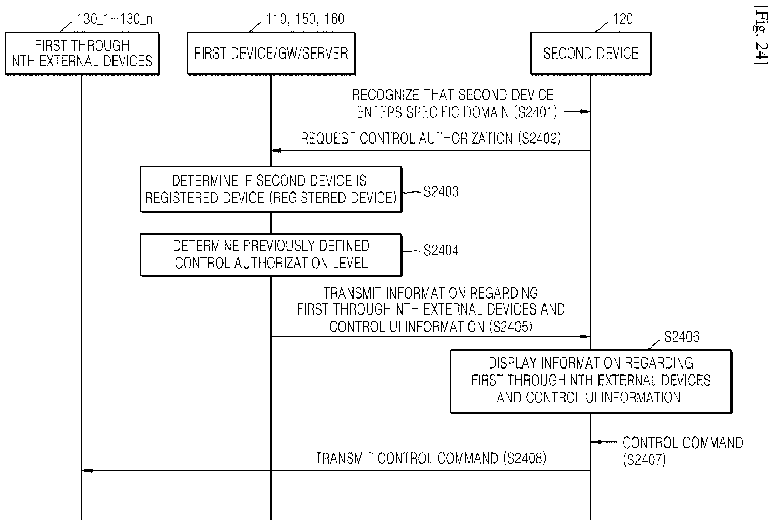

FIG. 24 is a flowchart of an external device control method according to another embodiment of the present disclosure.

Referring to FIG. 24, when the second device 120 enters a specific domain, authorization to temporarily control the first through nth external devices 130_1∼130_n that are included in the specific domain is requested to a control authorization management subject of the first through nth external devices 130_1∼130_n. The control authorization management subject of the first through nth external devices 130_1∼130_n may be the same as that described with reference to FIG. 20. For convenience of description, it will be described that the control authorization management subject of the first through nth external devices 130_1∼130_n is the first device 110. However, the control authorization management subject of the first through nth external devices 130_1∼130_n is not limited to the first device 110.

In operation S2401, when the second device 120 is recognized as having entered the specific domain, the second device 120 transmits a temporary control authorization request signal with respect to the first through nth external devices 130_1∼130_n that are included in the specific domain to the first device 110 in operation S2402. The specific domain may be a physical domain or a logical domain that is described with reference to FIG. 1 above. The second device 120 may be recognized as having entered the specific domain by using GPS information of the second device 120, a SSID or MAC address of an access point connected to the second device 120, a list of access points and signal intensity received by the second device 120, and the like.

The first device 110 determines if the second device 120 is a registered device according to a control authorization request of the second device 120 in operation S2403. The registered device is the same as that described with reference to FIG. 22 above.

If the second device 120 is the registered device, the first device 110 determines a previously defined temporary control authorization level of the second device in operation S2404, and transmits information regarding the first through nth external devices 130_1∼130_n and control UI information thereof based on the determined temporary control authorization level to the second device 120 in operation S2405. The second device 120 displays the received information regarding the first through nth external devices 130_1∼130_n. When an external device is selected based on the displayed information regarding the first through nth external devices 130_1∼130_n, the second device 120 may display the control UI information of the selected external device in operation S2406.

Operations S2405 and S2406 may be modified to operations of transmitting and receiving the information regarding the first through nth external devices 130_1∼130_n and transmitting and receiving the control UI information of the selected external device as illustrated in the flowchart of FIG. 22.

When a control command is input in operation S2407, the second device 120 directly transmits the control command to the selected external device in operation S2408.

The flowchart of FIG. 24 may be modified so that when the first device 110 recognizes that the second device 120 enters the specific domain, the second device 120 is authorized to temporarily control the first through nth external devices 130_1∼130_n.

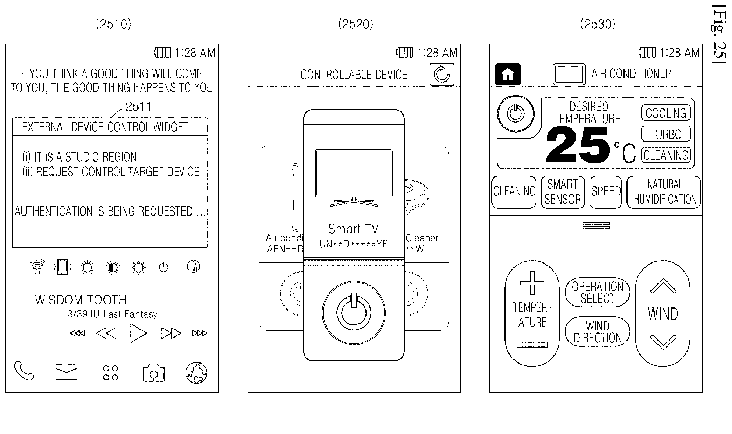

FIG. 25 illustrates screens 2510, 2520, and 2530 displayed on the second device 120 when the second device 120 that is recognized as having entered an office region is authorized to temporarily control the first through nth external devices 130_1∼130_n that are disposed in the office region, like the flowchart of FIG. 24 according to an embodiment of the present disclosure.

The screen 2510 displays an external device control widget 2511 on the second device 120 when the second device 120 is recognized as having entered the office region. The second device 120 may display an external device control list instead of the external device control widget 2511. A message "authentication is being requested" displayed on the screen 2510 indicates that the second device 120 is being authenticated whether the second device 120 may be authorized to temporarily control the first through nth external devices 130_1∼130_n that are disposed in the office region.

When the second device 120 is completely authenticated, information regarding controllable external devices is displayed on the second device 120 like the screen 2520 of FIG. 25. The screen 2520 is the same as the screen 2320 of FIG. 23. When an air conditioner is selected by a user of the second device 120, control UI information of the air conditioner may be displayed like the 2530 of FIG. 25. The control UI information of the selected external device is not limited to that displayed on the screen 2530.

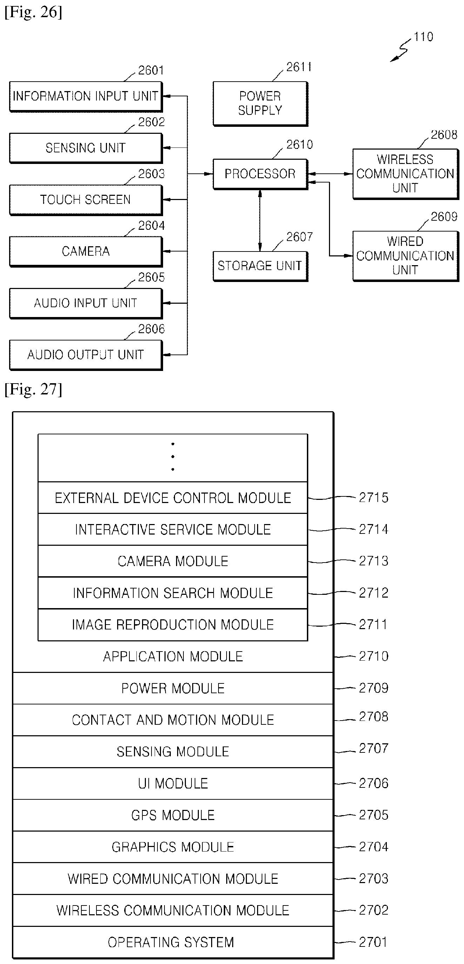

FIG. 26 is a block diagram of the first device 110 of FIG. 1 according to an embodiment of the present disclosure.

Referring to FIG. 26, the first device 110 includes an information input unit 2601, a sensing unit 2602, a touch screen 2603, a camera 2604, an audio input unit 2605, an audio output unit 2606, a storage unit 2607, a wireless communication unit 2608, a wired communication unit 2609, a processor 2610, and a power supply 2611. However, elements of the first device 110 are not limited to those illustrated in FIG. 26. That is, the first device 110 may include greater or lesser constituent elements than those illustrated in FIG. 26.

The information input unit 2601 may input data to control an operation of the first device 110, an external device selection command based on information regarding at least one external device according to an embodiment, a control command regarding a selected external device, and a temporary control authorization request command but the input information is not limited thereto. The information input unit 2601 may include at least one of a key pad, a dome switch, a job wheel, a jog switch, a hardware button, a hot key, a touch panel.

The sensing unit 2602 senses a current status of the first device 110 such as a location of the first device 110, whether there is any user contact, an orientation of the first device 110, an acceleration or deceleration of the first device 110, etc. and generates a sensing signal for controlling the operation of the first device 110. The sensing unit 2602 may include a proximity sensor and the above-described motion sensor. Thus, the sensing unit 2602 may generate a signal that recognizes a sensor based user gesture.

The proximity sensor is a sensor for detecting whether an object approaches a previously set detection surface or whether the object is present nearby by using a force of an electromagnetic field or an infrared ray without any actual physical touch. Examples of the proximity sensor include a transparent photoelectric sensor, a direct reflective photoelectric sensor, a mirror reflective photoelectric sensor, a high frequency oscillation photoelectric sensor, a capacitive photoelectric sensor, a magnetic photoelectric sensor, an infrared photoelectric sensor, etc.

The touch screen 2603 may be configured as a resistive (decompression) or capacitive touch screen but is not limited thereto. The touch screen 2603 may receive a user request, a user selection, or a user command that depends on the above-described touch based user gesture. The touch based user gesture may be defined as various combinations of a touch frequency, a touch pattern, a touch area, and a touch intensity. However, the defined touch based user gesture is not limited thereto.

The touch screen 2603 may include various sensors for sensing a touch or proximity touch thereon. Sensors included in the touch screen 2603 may generate a signal by sensing the touch based user gestures or patterns. A proximity sensor for the touch screen 2603 may be the same as the proximity sensor included in the sensing unit 2602.

An example of the sensor for sensing the touch of the touch screen 2603 may include a tactile sensor. The tactile sensor may sense various types of information such as roughness of a touch surface, hardness of a touch object, a temperature at a touch point, etc.

The touch of the touch screen 2603 means a pointer touching a touch panel. A proximity touch of the touch screen 2603 occurs when the pointer does not actually touch the touch panel but approaches the touch panel to within a predetermined distance. The pointer is a tool used to touch or proximity touch a special point on the touch screen 2603. Examples of the pointer may include a stylus pen, or a user's finger, etc., but are not limited thereto.

The touch screen 2603 displays information processed by the first device 110. For example, the touch screen 2603 may display user gestures or touch patterns sensed through a sensor included in the touch screen 2603, control data or user input information input through the user input unit 2601 or a screen responding to a signal sensed through the sensing unit 2602.

To perform an external device control method according to an embodiment, the touch screen 2603 receives a temporary control authorization request signal with respect to at least one external device and displays AR based information regarding the at least one external device and control UI information of a selected external device.

The touch screen 2603 may be referred to as an input and output apparatus. A screen displayed on the touch screen 2603 includes a graphical UI (GUI) based on a UI.

The touch screen 2603 may include a Liquid Crystal Display (LCD), a Thin Film Transistor Liquid Crystal Display (TFT-LCD), an Organic Light-Emitting Diode (OLED), a flexible display, a 3D display, or an Active Matrix OLED (AM OLED), but is not limited thereto. The touch screen 2603 may be referred to as a display. There may be two or more touch screens 2603 according to an implementation form of the first device 110.

The camera 2604 processes an image frame such as a still image or a moving image obtained by an image sensor (or a photo sensor) in a video call mode or a photographing mode. The processed image frame may be displayed on the touch screen 2603. Thus, the AR based information regarding the at least one external device according to an embodiment may be provided based on the image frame included in the still image or the moving image obtained by the camera 2604.

The image frame processed by the camera 2604 may be stored in the storage unit 2607 or transmitted to the outside through the wireless communication unit 2608 or the wired communication unit 2609. There may be two or more cameras 2604. For example, the camera 2604 may be configured as a front camera and a rear camera of the first device 110. The camera 2604 may be used as an input apparatus for recognizing a user space gesture.

The audio input unit 2605 may receive an input of an external acoustic signal in a call mode, a recording mode, or a voice recognition mode, convert the acoustic signal to electrical voice data, and transmit the electrical voice data to the processor 2610. The audio input unit 2605 may be configured as, for example, a microphone. The audio input unit 2605 may be configured to include diverse noise removal algorithms for removing noise generated during a process for receiving the input of the external acoustic signal.

The acoustic signal input by using the audio input unit 2605 may include user input information such as a request to perform an external device control method or a temporary control authorization request according to an embodiment. When the acoustic signal is a user voice signal based on a spoken language, the acoustic signal may be a user input based on voice recognition. The external acoustic signal input through the audio input unit 2605 may be stored in the storage unit 2607 via the processor 2610 or transmitted to the outside via the processor 2610 and the wireless communication unit 2608 or the processor 2610 and the wired communication unit 2609.

The audio output unit 2606 outputs the acoustic signal or an audio signal that is received from the outside or read from the storage unit 2607 in the call mode or an audio reproduction mode. The audio output unit 2606 may be configured as a speaker. When an audio signal is included in content when the content is reproduced, the audio output unit 2606 outputs the audio signal included in the reproduced content. The audio input unit 2605 and the audio output unit 2606 may be integrally formed within a head set.

The storage unit 2607 stores at least one program configured to be executed in the processor 2610 that will be described later and/or a command set and resource. The at least one program includes at least one program necessary for executing the external device control method according to an embodiment, an operating system program of the first device 110, an application program related to diverse functions (or services) performed by the first device 110, and a program for driving hardware components included in the first device 110, and an interactive service execution program but is not limited thereto.

The resource may include application information related to the first through nth external devices 130_1∼130_n, connection information of the first through nth external devices 130_1∼130_n, information regarding a device that may be authorized to temporarily control the first through nth external devices 130_1∼130_n, information regarding a user of the first device 110, information necessary for managing an application program set in the first device 110, and information regarding the program for driving hardware components included in the first device 110, but is not limited thereto.

The storage unit 2607 may include at least one type of storage medium, such as a flash memory type, a hard disk type, a multimedia card micro type, a card type memory (for example, SD, XD memory, etc.), Read Only Memory (ROM), Electronically Erasable Programmable ROM (EEPROM), Programmable ROM (PROM) magnetic memory, and an optical disk.

The at least one program and/or the command set that are stored in the storage unit 2607 may be classified as a plurality of modules according to functions.

FIG. 27 illustrates an example of programs and/or command sets that are stored in the storage unit 2607 and classified according to modules according to an embodiment of the present disclosure.

Referring to FIG. 27, the storage unit 2607 includes an operating system 2701, a wireless communication module 2702, a wired communication module 2703, a graphics module 2704, a GPS module 2705, a UI module 2706, a sensing module 2707, a contact and motion module 2708, a power module 2709, and an application module 2510, but is not limited thereto.

The application module 2710 includes an image reproduction module 2711, an information search module 2712, a camera module 2713, an interactive service module 2714, and an external device control module 2715, but is not limited thereto. For example, the application module 2710 may further include first through nth external device control modules. The first through nth external device control modules may independently operate for each of the first through nth external devices. The interactive service module 2714 may include a plurality of service modules. The plurality of service modules may include, for example, a video call service module, a voice call service module, and a chatting service module. The plurality of service modules may independently operate. The application module 2710 may include the integrated application module described with reference to FIG. 1 above. The application module 2710 may further include various modules such as an e-mail module, a Social Networking Service (SNS) module, a video conference module, an image management module, a browsing module, a calendar module, a widget module, a search module, and a word processing module.

The operating system 2701 controls and manages a general function of the first device 110 and includes a software component for enabling communication between hardware and software components included in the first device 110.

The wireless communication module 2702 enables communication with at least one external device (not shown) through the wireless communication unit 2608, and includes a software component for processing data received from and transmitted to the at least one external device through the wireless communication unit 2608. The at least one external device may include the server 160, the second device 120, and the first through nth external devices 130_1∼130_n but is not limited thereto.

The wireless communication module 2702 according to an embodiment may transmit information regarding the first through nth external devices 130_1∼130_n and control UI information of the first through nth external devices 130_1∼130_n to the second device 120, and receive a temporary control authorization request with respect to the first through nth external devices 130_1∼130_n from the second device 120.

The wired communication module 2703 enables communication with the wired communication unit 2609 configured as an element such as a Universal Serial Bus (USB) port and the first through nth external devices 130_1∼130_n, and includes a software component for processing data received from and transmitted to the first through nth external devices 130_1∼130_n through the wired communication unit 2609.

The graphics module 2704 includes a software component for brightness adjustment and rendering of graphics displayed on the touch screen 2603 and a software component for providing a virtual keyboard (or a soft keyboard) for inputting text in the application module 2710.

The GPS module 2705 includes a software component for determining a location of the first device 110 and providing the determined location to an application that provides a location based service. The UI module 2706 includes a software component for providing a UI necessary for an application that provides touch screen 2703 based UI information.

The sensing module 2707 includes a software component for determining sensing information based on the sensing unit 2602 and providing the determined sensing information to the application module 2710 that provides a service based on the determined sensing information. The contact and motion module 2708 includes a software component for detecting the touch screen 2603 based touch contact, tracking a contact based motion, and providing the tracked motion to the application module 2710 requiring the tracked motion.

The power module 2709 includes a software component for linking with the operating system 2701, controlling a power supply that supplies power to hardware components included in the first device 110, and controlling a sleep mode with respect to power supplied to the touch screen 2603.

Functions of the modules included in the application module 2710 may be intuitively inferred by one of ordinary skill in the art from their titles, and thus only the application module 2710 related to an embodiment will now be described.

For example, when the first device 110 performs an interactive service with the second device 130 by executing the interactive service module 2714, and the second device 120 is requested to be authorized to temporarily control the first through nth external devices 130_1∼130_n, the interactive service module 2714 may perform one of the external device control methods when the interactive service is performed according to the above-described various embodiments by executing the external device control module 2715.

When the interactive service module 2714 includes an external device control function as described with reference to FIG. 1, the external device control module 2715 may not be included in the application module 2710. However, even if the interactive service module 2714 includes the external device control function, the external device control module 2715 may be included in the application module 2710 independently from the interactive service module 2714. When the information regarding the first through nth external devices 130_1∼130_n is provided as AR based information, the camera module 2713 may operate by being called by the interactive service module 2714 as described with reference to FIG. 1 above.

The storage unit 2607 may not store the modules included in the application module 2710 among the program and/or command set of FIG. 27 or may store only location information such as a URL of the application module 2710 and display information indicating the application module 2710. When the modules included in the application module 2710 are not stored in the storage unit 2607, the processor 2610 may be connected to an external device through the wireless communication unit 2608 or the wired communication unit 2609 and use a program and/or a command set corresponding to the application module 2710 stored in the external device. The external device includes a cloud server or a device having the modules included in application module 2710, but is not limited thereto.

When only the location information of the application module 2710 and the display information indicating the application module 2710 are stored in the storage unit 2607, the processor 2610 may search for information stored in the external device through the wireless communication unit 2608 or the wired communication unit 2609 by using the location information of the application module 2710. The location information of the application module 2710 may be selected based on the display information indicating the application module 2710 displayed on the touch screen 2603.

The wireless communication unit 2608 may transmit and receive data to and from the external device over a wireless network including wireless Internet, a wireless Intranet, a wireless phone network, a wireless Local Area Network (LAN), a Wi-Fi network, a Wi-Fi Direct (WFD) network, a 3G network, a 4G Long Term Evolution (LTE) network, a Bluetooth network, an Infrared Data Association (IrDA) network, a RFID network, a Ultra WideBand (UWB) network, and a Zigbee network.

The wireless communication unit 2608 may include at least one of a broadcasting reception module, a mobile communication module, a wireless Internet module, a short distance communication module, and a location information module, but is not limited thereto.

The wired communication unit 2609 may transmit and receive data to and from the external device over a wired network such as a wired Internet. The wired communication unit 2609 may transmit and receive data to and from the external device (not shown) by using a plug and play interface such as a USB port (not shown). The wired communication unit 2609 may not be included in the elements of the first device 110.

The power supply 2611 supplies power to a hardware component included in the first device 110. The power supply 2611 includes one or more power sources such as a battery and an Alternating Current (AC) power source. The first device 110 may not include the power supply 2611 but may include a connection unit (not shown) that may be connected to an external power supply (not shown).

The processor 2610 may be referred to as one or more processors that control a general operation of the first device 110. The processor 2610 may generally control the information input unit 2601, the sensing unit 2602, the touch screen 2603, the camera 2604, the audio input unit 2605, the audio output unit 2606, the storage unit 2607, the wireless communication unit 2608, the wired communication unit 2609, and the power supply 2611 by using the operating system 2701 and the modules 2702 through 2715 included in the storage unit 2607. Thus, the processor 2610 may be referred to as a controller, a microprocessor, or a digital signal processor.

The processor 2610 may also provide a UI through the information input unit 2601, the sensing unit 2602, the touch screen 2603, the camera 2604, and the audio input unit 2605 by using the operating system 2701 and the UI module 2706.

The processor 2610 may execute at least one program related to the external device control method according to an embodiment and perform one of the methods as shown in the flowcharts of FIGS. 8, 11 through 17, 19, 20, 22, and 24. The processor 2610 may execute the program by reading the program from the storage unit 2607 or downloading the program from an external device connected through the wireless communication unit 2608 or the wired communication unit 2609. In this regard, the external device may be referred to as an application providing server or an application market server. The external device includes a cloud server or a communicable device near the first device 110. The processor 2610 may include an interface function unit between various hardware components included in the first device 110 and the processor 2610.

A block diagram of the second device 120 of FIG. 1 may also be configured as illustrated in FIG. 26. However, when the block diagram of FIG. 26 is that of the second device 120, some functions of each block may be different from those of the first device 110 described above.

For example, if the storage unit 2607 is included in each of the first device 110 and the second device 120, the storage unit 2607 may store different types of information. The operation standard of each block may be different. For example, the camera 2604 included in each of the first device 110 and the second device 120 may has a different pixel number.

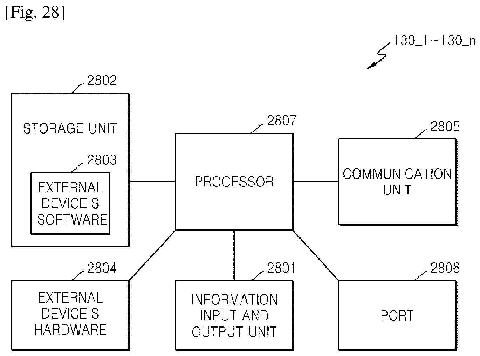

FIG. 28 is a block diagram of the first through nth external devices 130_1∼130_n of FIG. 1 according to an embodiment of the present disclosure. The block diagram of the first through nth external devices 130_1∼130_n is not limited to that illustrated in FIG. 28. For convenience of description, the block diagram of FIG. 28 is a block diagram of the first external device 130_1 below.

Referring to FIG. 28, the first external device 130_1 may include an information input and output unit 2801, a storage unit 2802 including external device's software 2803, external device's hardware 2804, a communication unit 2805, a port 2806, and a processor 2807 but is not limited thereto. For example, the first external device 130_1 may not include the port 2806 or may include a power supply (not shown). Blocks included in the first external device 130_1 may be different from those included in the second through nth external devices 130_2∼130_n in terms of at least one of a specification and a function.

User input information used to select first short distance communication and second short distance communication described with reference to FIGS. 4 through 7 above may be received through the information input and output unit 2801. The user input information may be input to select one of an NFC module and a BLE module as the first short distance communication and select one of a wireless LAN communication module and a Bluetooth communication module as the second short distance communication but is not limited thereto. The first short distance communication and the second short distance communication may be determined according to the configuration of the communication unit 2805 so that the user input information used to select the first short distance communication and the second short distance communication may be determined according to the configuration of the communication unit 2805.

The information input and output unit 2801 receives the user input information, and outputs information that is output from the first external device 130_1 when a device having a control authorization (including temporary control authorization) executes an application. The user input information may be based on at least one of touch based input information, physical button control based input information, user gesture based input information, user voice recognition based input information, face recognition based input information, and remote controller (not shown) based input information but is not limited thereto.

The information input and output unit 2801 may be configured according to input information that may be input. For example, when the application is executed by the first device 110 having the control authorization, the information input and output unit 2801 may include a physical button and an information output function block in a case where there is no user information input based on the first external device 130_1, and the user input information is necessary to request a second short distance communication connection between the first external device 130_1 and the first device 100. The physical button may be used to request the second short distance communication connection. The information output function block outputs necessary information based on a control command received according to the application executed by the first device 110 after establishing the second short distance communication connection between the first external device 130_1 and the first device 100. However, the elements of the information input and output unit 2801 are not limited thereto.

The storage unit 2802 may store programs and resources necessary for controlling a general operation of the first external device 130_1 by using the processor 2807. The programs may include a program for executing a function of the first external device 130_1. For example, when the first external device 130_1 is a smart TV, the programs may include a program for controlling a function of the smart TV. The program for controlling the function of the smart TV may include a program for controlling hardware of the first external device 130_1 when the first device 110 executes an application related to the smart TV. The programs stored in the storage unit 2802 may further include a communication program between the first device 110 and the first external device 130_1.

The storage unit 2802 may store a program for controlling the hardware of the first external device 130_1 according to each type of communication. Thus, the program for controlling the hardware of the first external device 130_1 may be executed according to a communication type determined by the processor 2807. For example, if the processor 2807 determines Bluetooth communication, the program for controlling the hardware of the first external device 130_1 may be executed based on Bluetooth communication.

The storage unit 2802 may include at least one type of storage medium, such as a flash memory type, a hard disk type, a multimedia card micro type, a card type memory (for example, SD, XD memory, etc.), ROM, EEPROM, PROM magnetic memory, and an optical disk.

The resource stored in the storage unit 2802 may include information for the second short distance communication connection, application information of the first external device 130_1, the information regarding the first external device 130_1 described with reference to FIGS. 4 through 7 above, and authentication information of the first external device 130_1, but is not limited thereto.

The external device's hardware 2804 may be defined according to the function of the first external device 130_1. For example, if the first external device 130_1 is a smart watch operating according to an application set in the first device 110, the external device's hardware 2804 may include a physical function unit (for example, a GPS module, a microphone, a speaker, etc. but is not limited thereto) that is necessary for performing a function of the smart watch linking with the application executed by the first device 110.

If the first external device 130_1 is an insulin resistivity and sensitivity measurer operating according to an insulin monitoring application executed by the first device 110, the external device's hardware 2804 may include an insulin resistivity measurer and an insulin sensitivity measurer but is not limited thereto. The external device's hardware 2804 may include various sensors according to the function of the first external device 130_1.

If the application executed by the first device 110 is a musical instrument playing application, and the first external device 130_1 is a keyboard or a guitar, the external device's hardware 2804 may include hardware for playing the keyboard or the guitar according to a control signal of the first device 110.

When the application executed by the first device 110 is a karaoke application, if the first external device 130_1 is a microphone, the external device's hardware 2804 may include a hardware element for controlling on/off or volume of the microphone, and, if the first external device 130_1 is a speaker, the external device's hardware 2804 may include a hardware element for controlling an acoustic output environment but the hardware element is not limited thereto.

The first external device 130_1 may implement a function performed by the external device's hardware 2804 in a software manner and may minimize or may not include the external device's hardware 2804. In this case, software may be stored as the external device's software 2803 and may be executed by the processor 2807 according to the control command received from the first device 110.

The communication unit 2805 includes a first short distance communication unit (not shown) including the NFC module and the BLE module and a second short distance communication unit (not shown) including the wireless communication module and the Bluetooth communication module. That is, the communication unit 2805 may further include a communication unit that may be connected to the second device 120 or the server 160 over the network 140.

The NF module included in the communication unit 2805 may be configured as an NFC tag or a chip that may be read/written. When an NFC module is installed in the first device 110, the NFC module included in the communication unit 2805 may be configured to perform two-way data communication with the NFC module installed in the first device 110 in a P2P mode.

The BLE module included in the communication unit 2805 may broadcast information used to connect the second short distance communication and related application information as described with reference to FIG. 5 or 7 above, may further broadcast the authentication information of the first external device 130_1 and the information regarding the first external device 130_1, and may receive connection information of the gateway 150 from the first device 110. However, the information broadcast from the BLE module may not include the related application information.

The wireless LAN communication module included in the communication unit 2805 may be configured to selectively perform direct communication and perform communication via the gateway 150 between the first device 110 and the first external device 130_1, only the direct communication between the first device 110 and the first external device 130_1, or only the communication via the gateway 150.

The port unit 2806 may include at least one of a USB port and a UART port but is not limited thereto. The first external device 130_1 may not include the port unit 2806. If the first device 110 and the first external device 130_1 are connected to each other via the port unit 2806, the first device 110 and the first external device 130_1 may be linked with each other via a wired communication channel.

The processor 2807 controls the general operation of the first external device 130_1 by executing the external device's software 2803 stored in the storage unit 2802. Thus, the processor 2807 may be referred to as a control unit. In particular, the processor 2807 may perform an operation of connecting the first device 110 and the first external device 130_1 through the communication unit 2805 to perform the external device control method according to an embodiment.

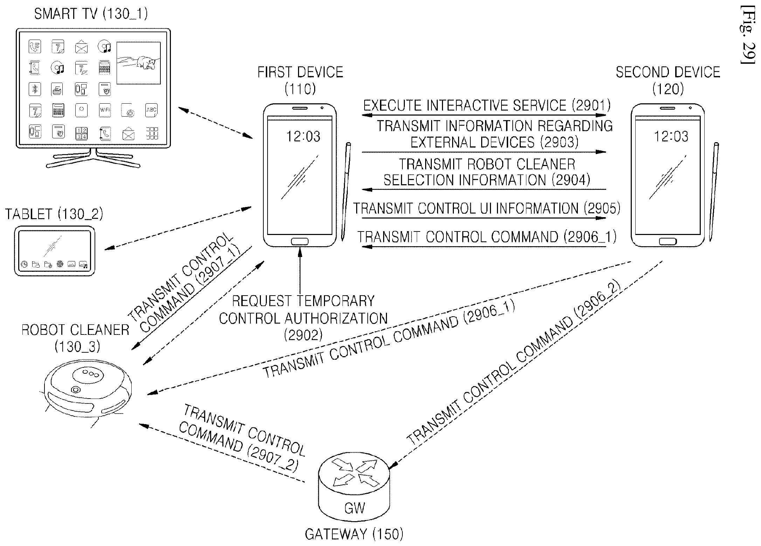

FIG. 29 illustrates an example in which the first through third external devices 130_ 1∼130_3 whose control is authorized to the first device 110 are a smart TV, a tablet, and a robot cleaner, respectively, when an interactive service is performed between the first device 110 and the second device 120 according to an embodiment of the present disclosure.

Referring to FIG. 29, when temporary control authorization is requested by a user of the first device 110 in operation 2902, the first device 110 automatically authorizes temporary control of the first through third external devices 130_ 1∼130_3 to the second device 120 that performs the interactive service in operation 2901 with the first device 110 and transmits information regarding the first through third external devices 130_ 1∼130_3 in operations 2903, 2904 and 2905. If a user of the second device 120 inputs a control command based on control UI information of a selected external device from among the first through third external devices 130_ 1∼130_3, the second device 120 transmits the input control command to the selected external device through the first device 110 in operations 2906-1 and 2907-1. However, the control command may be transmitted via the gateway 150 in operations 2906-2 and 2907.

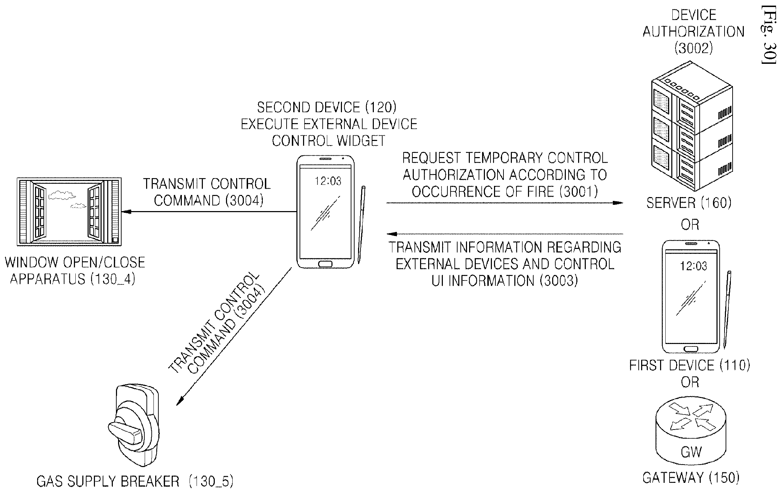

FIG. 30 illustrates an example in which an emergency situation occurs as described with reference to FIG. 20 according to an embodiment of the present disclosure.

Referring to FIG. 30, when a user of the second device 120 inputs information indicating that the emergency situation has occurred, the second device 120 executes an external device control widget. Since a selection of an icon indicating that there is a fire is sensed, the second device 120 transmits a temporary control authorization request signal to an external device control authorization management subject (the server 160, the first device 110, or the gateway 150) related to the occurrence of fire in operation 3001.

The external device control authorization management subject determines whether the second device 120 is registered as a device that may be authorized to temporarily control at least one external device in operation 3003. If the second device 120 is registered as the device that may be authorized to temporarily control the at least one external device, the external device control authorization management subject transmits information regarding the at least one external device and control UI information of the at least one external device to the second device 120 in operation 3002. The second device 120 transmits the control command to the external devices 130-3 and 130-5 in operation 3004.

The information regarding the at least one external device includes information regarding an external device disposed in a local domain based on a location where the second device 120 requests the temporary control authorization. The control UI information of the at least one external device may include control UI information of the external device disposed in the local domain.

The external device of FIG. 30 includes a window open/close apparatus 130_4 and a gas supply breaker 130_5 but is not limited thereto.

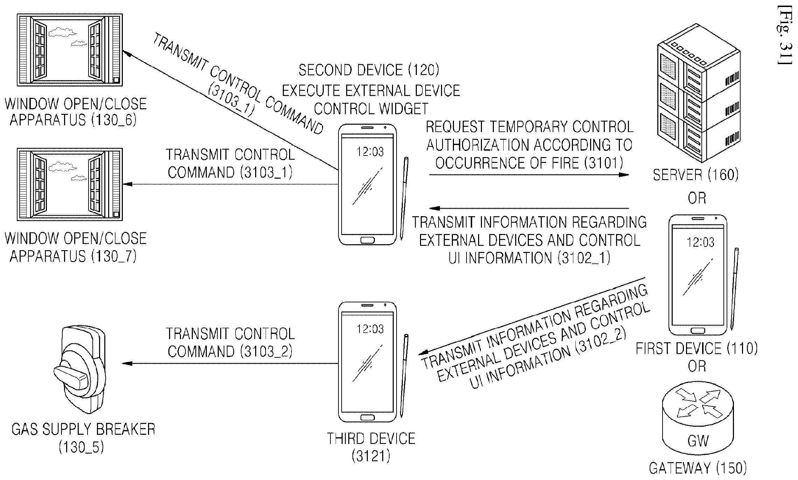

FIG. 31 illustrates an example in which the second device 120 executes an external device control widget to request authorization to temporarily control at least one external device according to an occurrence of fire to an external device control authorization management subject as illustrated in FIG. 30 according to an embodiment of the present disclosure.

Referring to FIG. 31, operations 3101, 3102-1, 3103-1 are similar to operations 3001, 3003 and 3004 of FIG. 30 respectively. The external device control authorization management subject recognizes that a third device 3121 exists in a local domain in which the second device 120 is disposed. Thus, the external device control authorization management subject may authorize the second device 120 to control window open/close apparatuses 130_6 and 130_7 and authorize the third device 3121 to control the gas supply breaker 130_5 in operations 3102-2 and 3103-2.

The external device control authorization management subject may transmit information regarding the window open/close apparatuses 130_6 and 130_7 and control UI information of the window open/close apparatuses 130_6 and 130_7 to the second device 120 and may transmit information regarding the gas supply breaker 130_5 and control UI information regarding the gas supply breaker 130_5 to the third device 3121.

Although the window open/close apparatuses 130_6 and 130_7 and the gas supply breaker 130_5 are examples of the at least one external device in FIG. 31, the at least one external device is not limited thereto. That is, the at least one external device may be different from that illustrated in FIG. 31 or another external device may be added.

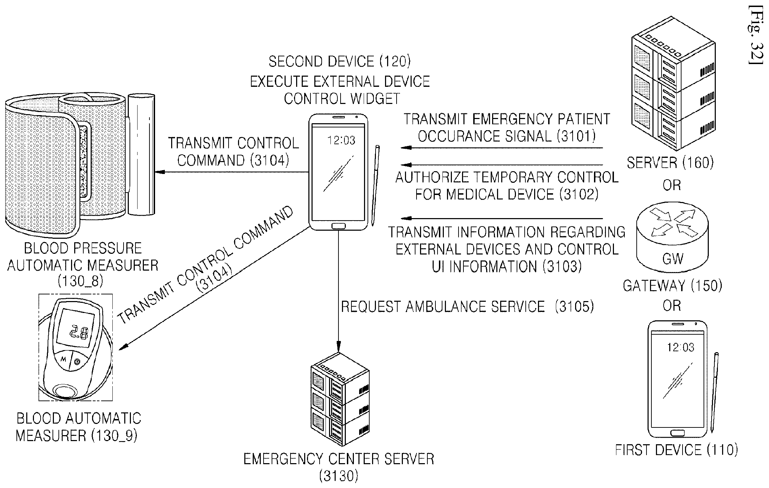

FIG. 32 illustrates an example in which the server 160, the gateway 150, and the first device 110, which are external device control authorization management subjects, authorize the second device 120 that is not authorized to control at least one external device to temporarily control the at least one external device, and provides information regarding the at least one external device and control UI information of the at least one external device to the second device 120 according to an embodiment of the present disclosure.

Referring to FIG. 32, the second device 120 that is authorized to temporarily control the at least one external device 130_8 and 130_9 in operations 3201-3205 has a function of requesting an emergency center server 3130 to get the emergency medical workers. Although a blood pressure automatic measurer 130_8 and a blood automatic measurer 130_9 are examples of the at least one external device in FIG. 32, the at least one external device is not limited thereto. That is, the at least one external device may be different from that illustrated in FIG. 32 or another external device may be added.

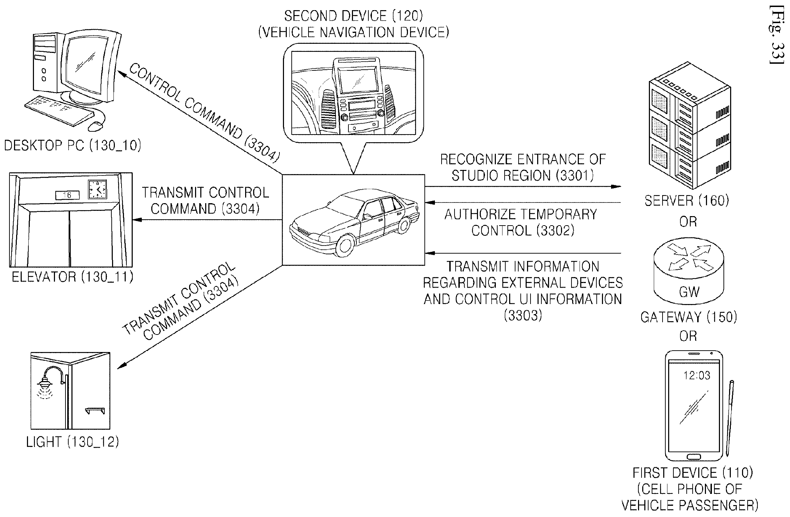

FIG. 33 illustrates an example in which a navigation device in a vehicle that is the second device 120 is authorized to temporarily control at least one external device when the server 160, the gateway 150, or the first device 110 recognizes that the vehicle enters a studio area, and information regarding the at least one external device and control UI information of the at least one external device are transmitted to the navigation device according to an embodiment of the present disclosure.

Referring to FIG. 33, the navigation device displays the information regarding the at least one external device and the control UI information of the at least one external device. If an external device selection signal is input based on the formation regarding the at least one external device displayed on the navigation device and a control command for the at least one external device is input based on the control UI information displayed on the navigation device, the navigation device may directly transmit the control command to the at least one external device to control a selected external device in operations 3301-3304.

Although a specific desk top PC 130_10 in a studio related to the external device control authorization management subject, an elevator 130_11 related to the studio, and light 130_12 in the studio are examples of the at least one external device in FIG. 33, the at least one external device is not limited thereto.

The external device control method according to various embodiments of the present disclosure may also be embodied as computer readable codes on a computer readable recording medium. The computer readable medium may be any recording apparatus capable of storing data that is read by a computer system, e.g., a Read-Only Memory (ROM), a Random Access Memory (RAM), a Compact Disc (CD)-ROM, a magnetic tape, a floppy disk, an optical data storage device, and so on. The computer readable medium may be distributed among computer systems that are interconnected through a network, and the present disclosure may be stored and implemented as computer readable code in a distributed manner.

While the present disclosure has been shown and described with reference to various embodiments thereof, it will be understood by those skilled in the art that various changes in form and details may be made herein without departing from the scope of the present disclosure as defined by the appended claims and their equivalents.

## Claims

1. An external device control method performed by a first device (110), the method comprising:
executing an interactive service between the first device (110) and a second device (120);
transmitting, from the first device (110), control user interface, UI, information regarding an external device (130) to the second device (120);
receiving, at the first device (110), a control command based on the control UI information from the second device (120); and
transmitting, from the first device (110) to the external device (130), the received control command.

2. The external device control method of claim 1, wherein the interactive service comprises a function of an application related to the external device (130).

3. The external device control method of claim 1, further comprising:
transmitting information regarding the external device (130) to the second device (120) while the interactive service is executed between the first device (110) and the second device (120),
wherein the transmitting of the information regarding the external device (130) to the second device (120) comprises authorizing the second device (120) to temporarily control the at least one external device (130).

4. The external device control method of claim 1, wherein the control UI information regarding the external device (130) is determined according to a control authorization level of the second device (120) with respect to the external device (130) or the external device (130).

5. The external device control method of claim 1, further comprising:
transmitting information regarding the external device (130) to the second device (120) while the interactive service is executed between the first device (110) and the second device (120),
wherein the transmitting of the information regarding the external device (130) to the second device (120) comprises:
determining a control authorization level of the second device (120) based on user information of the second device (120); and
determining the information regarding the at least one external device (130) that is that are transmitted to the second device (120) according to the determined control authorization level.

6. The external device control method of claim 1, further comprising:
transmitting information regarding the external device (130) to the second device (120) while the interactive service is executed between the first device (110) and the second device (120),
wherein the transmitting of the information regarding the external device (130) to the second device (120) comprises setting a temporary control authorization period of the second device (120) with respect to the at least one external device (130).

7. The external device control method of claim 3, 5 or 6, wherein the information regarding the external device (130) transmitted to the second device (120) comprises Augmented Reality, AR, based information.

8. The external device control method of claim 3, 5 or 6, wherein the information regarding the at least one external device (130) transmitted to the second device (120) comprises physical location based plan layout information of the at least one external device (130).

9. The external device control method of claim 1, further comprising:
transmitting information regarding a plurality of external device to the second device (120) while the interactive device is executed between the first device (110) and the second device (120);
receiving information regarding a selected external device (130) based on the information regarding the plurality of external device from the second device; and
executing an application related to the selected external device (130) in response to receiving the information regarding the selected external device (130),
wherein the transmitting of the control UI information regarding the selected external device (130) to the second device (120) is performed by using the application related to the selected external device (130).

10. A device (110) for controlling an external device (130), the device (110) comprising:
a storage (2607) configured to store information regarding at least one external device and at least one program;
a communication interface (2608, 2609) configured to communicate with the at least one external device and another device (120);
a touch screen (2603) configured to receive user input information and output information according to executing the at least one program; and
a processor (2610) configured to provide touch screen based UI information and authorize the other device (120) to temporarily control the external device (130) by executing the at least one program,
wherein the at least one program comprises commands that upon execution:
cause the device (110) to execute an interactive service between the device (110) and the other device (120) through the communication interface (2608, 2609), transmit control UI information regarding the external device (130) to the other device (120) through the communication unit (2608, 2609);
receive a control command based on the control UI information from the other device (120) through the communication unit (2608, 2609); and
cause the device (110) to transmit the received control command to the external device (130).

11. The device (110) of claim 10, wherein the at least one program further comprises commands for transmitting information regarding the external device (130) to the other device (120) while the interactive service is executed between the device (110) and the other device (120),
wherein the transmitting of information regarding the external device (130) to the other device (120) is determined according to a control authorization level of the other device (120) with respect to the external device (130).

12. The device (110) of claim 11, wherein the control UI information regarding the external device (130) is determined according to the control authorization level of the other device (120) with respect to the external device (130).

13. The device (110) of claim 11, wherein the at least one program further comprises commands for determining the control authorization level of the other device (120) regarding the external device (130) based on user information of the other device (120), and determining the information regarding the external device (130) that is to be transmitted to the other device (120) according to the determined control authorization level.

14. A non-transitory computer readable recording medium storing one or more programs comprising commands which, when executed by a processor, cause the performance of an external device control method by a first device (110), the external device control method comprising:
executing an interactive service between the first device (110) and a second device (120);
transmitting, from the first device (110), control User Interface, UI, information regarding an external device (130) to the second device (120);
receiving a control command based on the control UI information from the second device (120); and
transmitting, from the first device (110) to the external device (130), the received control command.

## Patentansprüche

1. Steuerungsverfahren für eine externe Vorrichtung, das durch eine erste Vorrichtung (110) durchgeführt wird, wobei das Verfahren Folgendes beinhaltet:
Ausführen eines interaktiven Dienstes zwischen der ersten Vorrichtung (110) und einer zweiten Vorrichtung (120);
Übermitteln, von der ersten Vorrichtung (110), von Steuerungsbenutzerschnittstellen-, UI(user interface)-Informationen bezüglich einer externen Vorrichtung (130) an die zweite Vorrichtung (120);
Empfangen, an der ersten Vorrichtung (110), eines Steuerungsbefehls basierend auf den Steuerungs-UI-Informationen von der zweiten Vorrichtung (120); und
Übermitteln, von der ersten Vorrichtung (110) an die externe Vorrichtung (130), des empfangenen Steuerungsbefehls.

2. Steuerungsverfahren für eine externe Vorrichtung gemäß Anspruch 1, wobei der interaktive Dienst eine Funktion einer auf die externe Vorrichtung (130) bezogenen Anwendung beinhaltet.

3. Steuerungsverfahren für eine externe Vorrichtung gemäß Anspruch 1, das ferner Folgendes beinhaltet:
Übermitteln von Informationen bezüglich der externen Vorrichtung (130) an die zweite Vorrichtung (120), während der interaktive Dienst zwischen der ersten Vorrichtung (110) und der zweiten Vorrichtung (120) ausgeführt wird, wobei das Übermitteln der Informationen bezüglich der externen Vorrichtung (130) an die zweite Vorrichtung (120) das Autorisieren der zweiten Vorrichtung (120) beinhaltet, um die mindestens eine externe Vorrichtung (130) vorübergehend zu steuern.

4. Steuerungsverfahren für eine externe Vorrichtung gemäß Anspruch 1, wobei die Steuerungs-UI-Informationen bezüglich der externen Vorrichtung (130) gemäß einer Steuerungsautorisierungsstufe der zweiten Vorrichtung (120) in Bezug auf die externe Vorrichtung (130) oder der externen Vorrichtung (130) bestimmt werden.

5. Steuerungsverfahren für eine externe Vorrichtung gemäß Anspruch 1, das ferner Folgendes beinhaltet:
Übermitteln von Informationen bezüglich der externen Vorrichtung (130) an die zweite Vorrichtung (120), während der interaktive Dienst zwischen der ersten Vorrichtung (110) und der zweiten Vorrichtung (120) ausgeführt wird, wobei das Übermitteln der Informationen bezüglich der externen Vorrichtung (130) an die zweite Vorrichtung (120) Folgendes beinhaltet:
Bestimmen einer Steuerungsautorisierungsstufe der zweiten Vorrichtung (120) basierend auf Benutzerinformationen der zweiten Vorrichtung (120); und
Bestimmen der Informationen bezüglich der mindestens einen externen Vorrichtung (130), die jene sind, die an die zweite Vorrichtung (120) gemäß der bestimmten Steuerungsautorisierungsstufe übermittelt werden.

6. Steuerungsverfahren für eine externe Vorrichtung gemäß Anspruch 1, das ferner Folgendes beinhaltet:
Übermitteln von Informationen bezüglich der externen Vorrichtung (130) an die zweite Vorrichtung (120), während der interaktive Dienst zwischen der ersten Vorrichtung (110) und der zweiten Vorrichtung (120) ausgeführt wird, wobei das Übermitteln der Informationen bezüglich der externen Vorrichtung (130) an die zweite Vorrichtung (120) das Festlegen einer vorübergehenden Steuerungsautorisierungsperiode der zweiten Vorrichtung (120) in Bezug auf die mindestens eine externe Vorrichtung (130) beinhaltet.

7. Steuerungsverfahren für eine externe Vorrichtung gemäß Anspruch 3, 5 oder 6, wobei die Informationen bezüglich der externen Vorrichtung (130), die an die zweite Vorrichtung (120) übertragen werden, AR-basierte Informationen (AR = Augmented Reality, erweiterte Realität) beinhalten.

8. Steuerungsverfahren für eine externe Vorrichtung gemäß Anspruch 3, 5 oder 6, wobei die Informationen bezüglich der mindestens einen externen Vorrichtung (130), die an die zweite Vorrichtung (120) übertragen werden, Planauslegungsinformationen basierend auf den physischen Ort der mindestens einen externen Vorrichtung (130) beinhalten.

9. Steuerungsverfahren für eine externe Vorrichtung gemäß Anspruch 1, das ferner Folgendes beinhaltet:
Übermitteln von Informationen bezüglich einer Vielzahl von externen Vorrichtungen an die zweite Vorrichtung (120), während der interaktive Dienst zwischen der ersten Vorrichtung (110) und der zweiten Vorrichtung (120) ausgeführt wird;
Empfangen von Informationen bezüglich einer ausgewählten externen Vorrichtung (130) basierend auf den Informationen bezüglich der Vielzahl von externen Vorrichtungen von der zweiten Vorrichtung; und
Ausführen einer auf die ausgewählte externe Vorrichtung (130) bezogenen Anwendung als Reaktion auf das Empfangen der Informationen bezüglich der ausgewählten externen Vorrichtung (130), wobei das Übermitteln der Steuerungs-UI-Informationen bezüglich der ausgewählten externen Vorrichtung (130) an die zweite Vorrichtung (120) unter Verwendung der auf die ausgewählte externe Vorrichtung (130) bezogenen Anwendung durchgeführt wird.

10. Vorrichtung (110) zum Steuern einer externen Vorrichtung (130), wobei die Vorrichtung (110) Folgendes beinhaltet:
einen Speicher (2607), der konfiguriert ist, Informationen bezüglich mindestens einer externen Vorrichtung und mindestens einem Programm zu speichern;
eine Kommunikationsschnittstelle (2608, 2609), die konfiguriert ist, mit der mindestens einen externen Vorrichtung und einer anderen Vorrichtung (120) zu kommunizieren;
einen Berührungsbildschirm (2603), der konfiguriert ist, Benutzer-Eingabeinformationen und Ausgabeinformationen gemäß dem Ausführen des mindestens einen Programms zu empfangen; und
einen Prozessor (2610), der konfiguriert ist, berührungsbildschirmbasierte UI-Informationen bereitzustellen und die andere Vorrichtung (120) zu autorisieren, um die externe Vorrichtung (130) zu steuern, durch Ausführen des mindestens einen Programms, wobei das mindestens eine Programm Befehle beinhaltet, die bei Ausführung:
bewirken, dass die Vorrichtung (110) einen interaktiven Dienst zwischen der Vorrichtung (110) und der anderen Vorrichtung (120) über die Kommunikationsschnittstelle (2608, 2609) ausführt, Steuerungs-UI-Informationen bezüglich der externen Vorrichtung (130) an die andere Vorrichtung (120) über die Kommunikationseinheit (2608, 2609) überträgt;
einen Steuerungsbefehl basierend auf den Steuerungs-UI-Informationen von der anderen Vorrichtung (120) über die Kommunikationseinheit (2608, 2609) empfängt; und
bewirken, dass die Vorrichtung (110) den empfangenen Steuerungsbefehl an die externe Vorrichtung (130) übermittelt.

11. Vorrichtung (110) gemäß Anspruch 10, wobei das mindestens eine Programm ferner Befehle zum Übermitteln von Informationen bezüglich der externen Vorrichtung (130) an die andere Vorrichtung (120), während der interaktive Dienst zwischen der Vorrichtung (110) und der anderen Vorrichtung (120) ausgeführt wird, beinhaltet,
wobei das Übermitteln von Informationen bezüglich der externen Vorrichtung (130) an die andere Vorrichtung (120) gemäß einer Steuerungsautorisierungsstufe der anderen Vorrichtung (120) in Bezug auf die externe Vorrichtung (130) bestimmt wird.

12. Vorrichtung (110) gemäß Anspruch 11, wobei die Steuerungs-UI-Informationen bezüglich der externen Vorrichtung (130) gemäß der Steuerungsautorisierungsstufe der anderen Vorrichtung (120) in Bezug auf die externe Vorrichtung (130) bestimmt werden.

13. Vorrichtung (110) gemäß Anspruch 11, wobei das mindestens eine Programm ferner Befehle zum Bestimmen der Steuerungsautorisierungsstufe der anderen Vorrichtung (120) bezüglich der externen Vorrichtung (130) basierend auf Benutzerinformationen der anderen Vorrichtung (120) und zum Bestimmen der Informationen bezüglich der externen Vorrichtung (130), die an die andere Vorrichtung (120) zu übermitteln sind, gemäß der bestimmten Steuerungsautorisierungsstufe beinhaltet.

14. Nicht transitorisches, computerlesbares Aufzeichnungsmedium, das ein oder mehrere Programme speichert, die Befehle beinhalten, die, wenn durch einen Prozessor ausgeführt, die Durchführung eines Steuerungsverfahrens für eine externe Vorrichtung durch eine erste Vorrichtung (110) bewirken, wobei das Steuerungsverfahren für eine externe Vorrichtung Folgendes beinhaltet:
Ausführen eines interaktiven Dienstes zwischen der ersten Vorrichtung (110) und einer zweiten Vorrichtung (120);
Übermitteln, von der ersten Vorrichtung (110), von Steuerungsbenutzerschnittstellen-, UI-Informationen bezüglich einer externen Vorrichtung (130) an die zweite Vorrichtung (120);
Empfangen eines Steuerungsbefehls basierend auf den Steuerungs-UI-Informationen von der zweiten Vorrichtung (120); und
Übermitteln, von der ersten Vorrichtung (110) an die externe Vorrichtung (130), des empfangenen Steuerungsbefehls.

## Revendications

1. Procédé de commande de dispositif externe effectué par un premier dispositif (110), ledit procédé comprenant :
l'exécution d'un service interactif entre le premier dispositif (110) et un second dispositif (120) ;
la transmission, à partir du premier dispositif (110), des informations d'interface utilisateur (UI) de commande concernant un dispositif externe (130) au second dispositif (120) ;
la réception, au niveau du premier dispositif (110), d'une instruction de commande sur la base des informations UI de commande provenant du second dispositif (120) ; et
la transmission, du premier dispositif (110) au dispositif externe (130), de l'instruction de commande reçue.

2. Procédé de commande de dispositif externe selon la revendication 1, ledit service interactif comprenant une fonction d'une application relative au dispositif externe (130).

3. Procédé de commande de dispositif externe selon la revendication 1, comprenant en outre :
la transmission d'informations concernant le dispositif externe (130) au second dispositif (120) tandis que le service interactif est exécuté entre le premier dispositif (110) et le second dispositif (120), ladite transmission des informations concernant le dispositif externe (130) au second dispositif (120) comprenant l'autorisation au second dispositif (120) de commander temporairement le au moins un dispositif externe (130).

4. Procédé de commande de dispositif externe selon la revendication 1, lesdites informations UI de commande concernant le dispositif externe (130) étant déterminées selon un niveau d'autorisation de commande du second dispositif (120) par rapport au dispositif externe (130) ou du dispositif externe (130).

5. Procédé de commande de dispositif externe selon la revendication 1, comprenant en outre :
la transmission d'informations concernant le dispositif externe (130) au second dispositif (120) tandis que le service interactif est exécuté entre le premier dispositif (110) et le second dispositif (120), ladite transmission des informations concernant le dispositif externe (130) au second dispositif (120) comprenant :
la détermination d'un niveau d'autorisation de commande du second dispositif (120) sur la base des informations d'utilisateur du second dispositif (120) ; et
la détermination des informations concernant le au moins un dispositif externe (130) qui sont transmises au second dispositif (120) selon le niveau d'autorisation de commande déterminé.

6. Procédé de commande de dispositif externe selon la revendication 1, comprenant en outre :
la transmission d'informations concernant le dispositif externe (130) au second dispositif (120) tandis que le service interactif est exécuté entre le premier dispositif (110) et le second dispositif (120), ladite transmission des informations concernant le dispositif externe (130) au second dispositif (120) comprenant la définition d'une période d'autorisation de commande temporaire du second dispositif (120) par rapport à l'au moins un dispositif externe (130).

7. Procédé de commande de dispositif externe selon la revendication 3, 5 ou 6, lesdites informations concernant le dispositif externe (130) transmises au second dispositif (120) comprenant une réalité augmentée, RA, sur la base des informations.

8. Procédé de commande de dispositif externe selon la revendication 3, 5 ou 6, lesdites informations concernant le au moins un dispositif externe (130) transmises au second dispositif (120) comprenant des informations de disposition de plan basées sur l'emplacement physique du au moins un dispositif externe (130).

9. Procédé de commande de dispositif externe selon la revendication 1, comprenant en outre :
la transmission d'informations concernant une pluralité de dispositifs externes au second dispositif (120) tandis que le dispositif interactif est exécuté entre le premier dispositif (110) et le second dispositif (120) ;
la réception des informations concernant un dispositif externe sélectionné (130) sur la base des informations concernant la pluralité de dispositifs externes provenant du second dispositif ; et
l'exécution d'une application relative au dispositif externe sélectionné (130) en réponse à la réception des informations concernant le dispositif externe sélectionné (130), ladite transmission des informations UI de commande concernant le dispositif externe sélectionné (130) au second dispositif (120) étant effectuée à l'aide de l'application relative au dispositif externe sélectionné (130).

10. Dispositif (110) permettant de commander un dispositif externe (130), ledit dispositif (110) comprenant :
un dispositif de stockage (2607) configuré pour stocker des informations concernant au moins un dispositif externe et au moins un programme ;
une interface de communication (2608, 2609) configurée pour communiquer avec le au moins un dispositif externe et un autre dispositif (120) ;
un écran tactile (2603) configuré pour recevoir des informations de saisie de l'utilisateur et pour délivrer en sortie des informations conformément à l'exécution du au moins un programme ; et
un processeur (2610) configuré pour fournir des informations UI basées sur l'écran tactile et autoriser l'autre dispositif (120) à commander temporairement le dispositif externe (130) en exécutant le au moins un programme, ledit au moins un programme comprenant des instructions qui, lors de leur exécution :
amènent le dispositif (110) à exécuter un service interactif entre le dispositif (110) et l'autre dispositif (120) par l'intermédiaire de l'interface de communication (2608, 2609), à transmettre des informations UI de commande concernant le dispositif externe (130) à l'autre dispositif (120) par l'intermédiaire de l'unité de communication (2608, 2609) ;
à recevoir une instruction de commande sur la base des informations UI de commande provenant de l'autre dispositif (120) par l'intermédiaire de l'unité de communication (2608, 2609) ; et
amènent le dispositif (110) à transmettre une instruction de commande reçue au dispositif externe (130).

11. Dispositif (110) selon la revendication 10, ledit au moins un programme comprenant en outre des commandes permettant de transmettre des informations concernant le dispositif externe (130) à l'autre dispositif (120) tandis que le service interactif est exécuté entre le dispositif (110) et l'autre dispositif (120),
ladite transmission des informations concernant le dispositif externe (130) à l'autre dispositif (120) étant déterminée selon un niveau d'autorisation de commande de l'autre dispositif (120) par rapport au dispositif externe (130).

12. Dispositif (110) selon la revendication 11, lesdites informations UI de commande concernant le dispositif externe (130) étant déterminées selon le niveau d'autorisation de commande de l'autre dispositif (120) par rapport au dispositif externe (130).

13. Dispositif (110) selon la revendication 11, ledit au moins un programme comprenant en outre des instructions permettant de déterminer le niveau d'autorisation de commande de l'autre dispositif (120) concernant le dispositif externe (130) sur la base des informations d'utilisateur d'un autre dispositif (120) et la détermination des informations concernant le dispositif externe (130) à transmettre à l'autre dispositif (120) selon le niveau d'autorisation de commande déterminé.

14. Support d'enregistrement lisible par ordinateur non transitoire stockant un ou plusieurs programmes comprenant des instructions qui, lorsqu'elles sont exécutées par un processeur, entraînent l'exécution d'un procédé de commande de dispositif externe par un premier dispositif (110), ledit procédé de commande de dispositif externe comprenant :
l'exécution d'un service interactif entre le premier dispositif (110) et un second dispositif (120) ;
la transmission, du premier dispositif (110) au second dispositif (120), des informations UI d'interface utilisateur de commande concernant un dispositif externe (130) ;
la réception d'une instruction de commande sur la base des informations UI de commande provenant du second dispositif (120) ; et
la transmission, du premier dispositif (110) au dispositif externe (130), de l'instruction de commande reçue.
